# EUROPEAN PATENT SPECIFICATION

(11) **EP 3 905 475 B1**
(45) Date of publication and mention of the grant of the patent: **12.04.2023**
(21) Application number: 19904202.9
(22) Date of filing: 23.12.2019
(51) Int. Cl.: H02J 7/00

(54) **CHARGING/DISCHARGING APPARATUS, CONTROL METHOD AND APPARATUS, BATTERY APPARATUS, AND STORAGE MEDIUM**
LADE-/ENTLADEVORRICHTUNG, STEUERVERFAHREN UND VORRICHTUNG, BATTERIEVORRICHTUNG UND SPEICHERMEDIUM
APPAREIL DE CHARGE/DÉCHARGE, APPAREIL ET PROCÉDÉ DE COMMANDE, APPAREIL DE BATTERIE, ET SUPPORT DE STOCKAGE

(30) Priority: 29.12.2018 CN 201811640476
(43) Date of publication of application: 03.11.2021
(73) Proprietor: ZTE Corporation, Shenzhen, Guangdong Province 518057 (CN)
(72) Inventor: YANG, Rui, Shenzhen, Guangdong Province 518057 (CN); LI, Lin, Shenzhen, Guangdong Province 518057 (CN); ZHANG, Zhe, Shenzhen, Guangdong Province 518057 (CN); FENG, Fujian, Shenzhen, Guangdong Province 518057 (CN); WU, Yaju, Shenzhen, Guangdong Province 518057 (CN); LIU, Bin, Shenzhen, Guangdong Province 518057 (CN); REN, Xiaobo, Shenzhen, Guangdong Province 518057 (CN)
(74) Representative: Casalonga
(86) International application number: PCT/CN2019/127552
(87) International publication number: WO 2020/135351

(56) References cited:
- US-A1- 2015 084 404
- US-A1- 2016 049 813
- US-A1- 2016 301 232
- US-A1- 2018 309 172

## Description

### TECHNICAL FIELD

The present disclosure relates to the field of battery technology.

### BACKGROUND

A lithium battery is advantageous in long cycling life, small bulk, light weight, fast charging/discharging with big current. It is very difficult in the industry to make full use of these characteristics of the lithium battery to obtain a relevant economic value. Especially, the lithium battery is susceptible to such safety issues as an overcurrent during a charging process, which has been one of difficulties to be overcome in a lithium management system. In lithium battery management in the existing industry, charging safety is passively maintained through protection of battery, and only passive overcurrent charging protection measures can be taken.

A traditional separated lithium battery is provided with charging/discharging protection and is large in size. During a charging process of the lithium battery, especially when an initial battery voltage is low, the battery is susceptible to big-current and even overcurrent charging. In order to avoid continuous overcurrent that would cause successive safety risks, a battery management system will perform overcurrent protection by disconnecting charging circuit to stop charging. This method not only affects the service life of the battery, but also seriously affects the charging effect of the battery, leading to the charging cannot be continued or the charing time is too long, and even damage the battery.

US 2016/301232 A1, US 2018/309172 A1, US 2016/049813 A1 and US 2014/084404 A1 discloses related charging/discharging technologies for the lithium battery, however, all of them still can't solve the overcurrent issues. In particular, US 2016/301232 A1 discloses a control unit and a battery unit with a first and a second resistance paths, a normal path, a control unit and a battery cell group. The control unit further comprises a cell group voltage detection unit and a power supply line voltage detection unit. When a voltage difference between the values of said detection units is above a predetermined voltage difference, at least one of the first and second resistance paths are activated; otherwise, the normal path is activated.

In an embodiment, the disclosure of US 2018/309172 A1 is very similar to that mentioned for US 2016/301232 A1, wherein a precharge part is present and controlled based on a voltage difference between a voltage at an external connection terminal (meant for connecting to a power supply line) and a voltage across the energy storage unit.

US 2014/084404 A1 is relevant for the implementation of a current limiting unit and a charging switch in parallel comprising a plurality of FET transistors.

US 2014/084404 A1 can be cited as less relevant to the invention.

### SUMMARY

The invention is defined by the appended claims.

In one aspect, the present disclosure provides a charging/discharging apparatus including: a processor, a voltage measurement unit, a current limiting unit, and a switch unit. Where after the current limiting unit is connected in parallel to the switch unit, a branch comprising said two elements in parallel is connectable to a battery unit in series and a power supply configured to charge the battery unit; the processor is connected to the voltage measurement unit, the current limiting unit, and the switch unit; the voltage measurement unit is connected to two ends of the battery unit; and the voltage measurement unit is connected to two ends of the power supply.

Where the voltage measurement unit is configured to measure a voltage over two ends of the battery unit, and measure a voltage over two ends of the power supply;
the processor is configured to, according to the voltages measured by the voltage measurement unit, on/off states of the current limiting unit and the switch unit to implement charging/discharging of the battery unit by at least one of the current limiting unit and the switch unit;
the processor (U2) is configured to switch on or off the current limit unit (U3), so that a charging branch with a limited current current is or is not provided, respectively; and
the processor (U2) is configured to switch on or off the switch unit (U4), so that a charging branch with unlimited current is or is not provided, respectively; and
the charging/discharging apparatus further includes a current measurement unit and a shunt, the current measurement unit is connected with the shunt and the processor, and the shunt is connected with the battery unit in series;
the current measurement unit is configured to measure a discharging current or a charging current of the battery unit; and
the processor is further configured to control, according to the discharging current or the charging current measured by the current measurement unit, on/off states of the current limiting unit and the switch unit to implement charging/discharging of the battery unit by at least one of the current limiting unit; and the switch unit including,
switching off the charging branch of the switch unit and switching on the current limiting unit when the current limiting unit is switched off, the charging branch of the switch unit is switched on, and the current measured by the current measurement unit is greater than or equal to a second threshold; and
the processor is further configured to adjust a current value of the current limiting unit after the current limiting unit is switched on.

The processor is configured to control, according to the voltages measured by the voltage measurement unit, on/off states of the current limiting unit and the switch unit to implement charging/discharging of the battery unit by at least one of the current limiting unit and the switch unit includes:
switching off the charging branch of the switch unit and switching on the current limiting unit when a difference between a voltage of the power supply and a voltage of the battery unit that are measured by the voltage measurement unit is greater than or equal to a first threshold, so as to charge the battery unit through the current limiting unit; and
switching off the current limiting unit and switching on the charging branch of the switch unit when the difference between the voltage of the power supply and the voltage of the battery unit is smaller than the first threshold, so as to charge the battery unit through the switch unit.

The switch unit is further configured to provide a unidirectional discharging branch to be switched on or off based on the processor's control;
optionally, the processor is further configured to switch on the unidirectional discharging branch of the switch unit before charging or before comparing voltage values of the power supply and the battery unit;
optionally, the processor is further configured to, when the battery unit is fully charged, switch off the charging branch of the switch unit, switch on the unidirectional discharging branch of the switch unit, and switch off the current limiting unit.

The processor is further configured to at least one of following operations:
i) when the power supply is powered off, switch off the charging branch of the switch unit, switch off the current limiting unit and switch on the unidirectional discharging branch of the switch unit;
ii) when the power supply is powered off, switch off the current limiting unit and switch on the charging branch of the switch unit;
iii) when the power supply is powered off and the current measured by the current measurement unit is greater than a third threshold, switch off the current limiting unit and switch on the charging branch of the switch unit.

The switch unit includes at least one of following components:
i) a first switch, a second switch and a first diode, the first diode and the second switch being connected in series, the first switch being connected in parallel to two ends of a series branch configured by the first diode and the second switch, and a conduction direction of the first diode being a discharging current direction of the battery unit;
ii) a first switch and a second switch connected in series and a first diode connected in parallel to two ends of the first switch, the conduction direction of the first diode being the discharging current direction of the battery unit;
iii) a first switch and a second switch connected in series, a first diode connected in parallel to the two ends of the first switch, and a second diode connected in parallel to two ends of the second switch, the conduction direction of the first diode being the discharging current direction of the battery unit, and a conduction direction of the second diode being a charging current direction for charging the battery unit; and
where the voltage measurement unit includes a first voltage measurement unit and a second voltage measurement unit, the first voltage measurement unit being connected to two ends of the battery unit, and the second voltage measurement unit being connected to two ends of the power supply, and wherein
the first voltage measurement unit is configured to measure voltage over the two ends of the battery unit, and
the second voltage measurement unit is configured to measure voltage over the two ends of the power supply.

The charging/discharging apparatus further includes a cell measurement unit connecting the battery unit and the processor, where
the cell measurement unit is configured to measure a cell voltage and a cell temperature in the battery unit, and
the processor is further configured to control the on/off states of the current limiting unit and the switch unit based on the cell voltage and the cell temperature.

Another aspect of the present disclosure provides a battery apparatus including: a battery unit and the charging/discharging apparatus as described above.

Another aspect of the present disclosure provides a charging/discharging control method, applicable for the charging/discharging apparatus as described above, the charging/discharging control method including:
acquiring a first voltage over the two ends of the battery unit and a second voltage over the two ends of the power supply; and
controlling the on/off states of the current limiting unit and the switch unit according to the first voltage and the second voltage to implement charging/discharging of the battery unit through at least one of the current limiting unit and the switch unit; and
the method further including:
   acquiring the charging current or the discharging current of the battery unit;
   controlling the on/off states of the current limiting unit and the switch unit according to the charging current or the discharging current to perform the charging/discharging of the battery unit through at least one of the current limiting unit and the switch unit includes,
   switching off the charging branch of the switch unit and switching on the current limiting unit when the current limiting unit is switched off, the charging branch of the switch unit is switched on, and the discharging current is greater than or equal to the second threshold.

Controlling the on/off states of the current limiting unit and the switch unit according to the first voltage and the second voltage to perform charging/discharging of the battery unit through at least one of the current limiting unit and the switch unit includes:
switching off the charging branch of the switch unit and switching on the current limiting unit when a difference between the second voltage and the first voltage is greater than or equal to the first threshold, so as to charge the battery unit through the current limiting unit; and
switching off the current limiting unit and switching on the charging branch of the switch unit when the difference between the second voltage and the first voltage is smaller than the first threshold, so as to charge the battery unit through the switch unit.

The charging/discharging control method further including switching on a unidirectional discharging branch of the switch unit before charging or before comparing voltage values of the power supply and the battery unit;
optionally, the charging/discharging control method further including: switching off the charging branch of the switch unit, switching on the unidirectional discharging branch of the switch unit, and switching off the current limiting unit when the battery unit is fully charged.

The charging/discharging control method further including at least one of following operations:
i) switching off the current limiting unit, switching off the charging branch of the switch unit, and switching on the unidirectional discharging branch of the switch unit, when the power supply is powered off;
ii) switching off the current limiting unit and switching on the charging branch of the switch unit when the power supply is powered off;
iii) switching off the current limiting unit and switching on the charging branch of the switch unit when the power supply is powered off and the discharging current of the battery unit is greater than a third threshold.

Another aspect of the present disclosure provides a charging/discharging control apparatus including a memory and a processor, the memory storing a program that, when executed by the processor, implements the charging/discharging control method as described above.

Another aspect of the present disclosure provides a computer readable storage medium having one or more programs capable of being performed by one or more processors to implement the charging/discharging control method as described above.

### BRIEF DESCRIPTION OF THE DRAWINGS

The drawings help to provide further understanding on technical solutions of the present disclosure, and form part of the specification. The drawings and the embodiments of the present disclosure are combined to describe the technical solutions of the present disclosure but do not form a limitation to the technical solutions of the present disclosure.
FIG. 1 is a schematic diagram of a simple rechargeable battery system.
FIG. 2A is a schematic diagram of a battery apparatus.
FIG. 2B is a schematic diagram of another battery apparatus according to an embodiment of the present disclosure.
FIG. 2C is a schematic diagram of yet another battery apparatus.
FIG. 3 is a schematic diagram of still another battery apparatus.
FIG. 4 is a flowchart of a charging/discharging control method.
FIG. 5 is a schematic diagram of still another battery apparatus according to an embodiment of the present disclosure.
FIG. 6 is a schematic diagram of still another battery apparatus.
FIG. 7 is a schematic diagram of still another battery apparatus.
FIG. 8 is a schematic diagram of a current limiting unit.
FIG. 9 is a schematic diagram of a voltage measurement unit.
FIG. 10 is a schematic diagram of a current measurement unit.
FIG. 11 is a flowchart of a charging/discharging control method according to an embodiment of the present disclosure.
FIG. 12 is a flowchart of another charging/discharging control method according to an embodiment of the present disclosure.
FIG. 13 is a schematic diagram of a charging/discharging control apparatus.
FIG. 14 is a schematic diagram of a storage medium.

### DETAILED DESCRIPTION

In order to clarify the objective, technical solutions, and advantages of the present disclosure, a detailed descipriton is provided below with reference to the accompanying drawings.

The steps shown in the flowcharts of the drawings may be performed in a computer system like a set of computer-executable instructions. Besides, although a logical sequence is shown in the flowchart, in some cases, the steps shown or described may be performed in an order different than the one shown here.

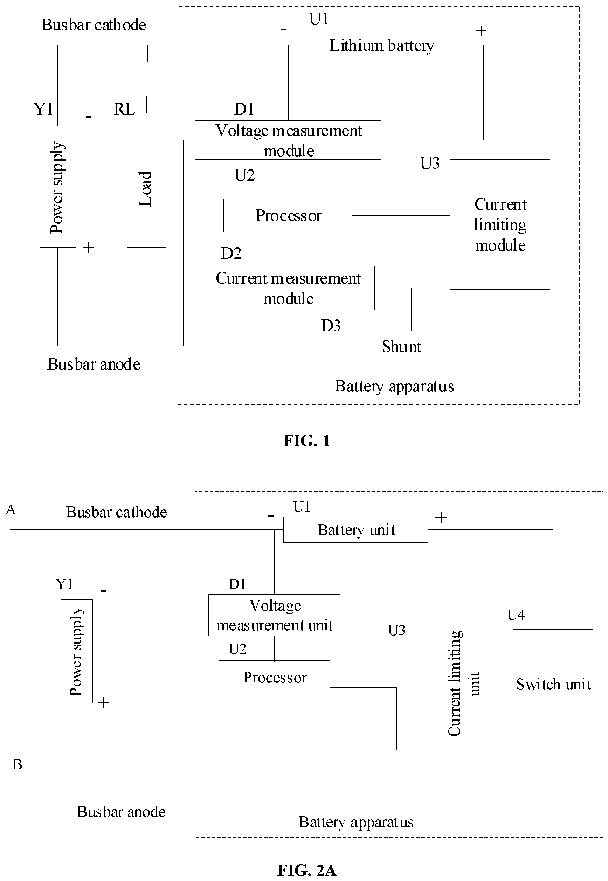

A common charging/discharging protection measure is to connect in series in a charging/discharging circuit a current limiting module that performs current limiting all through charging/discharging, as shown in the simple rechargeable battery system in FIG. 1. Although this solution solves the problem of overcurrent in a charging phase, the current limiting module consumes too much power, thus charging/discharging loss is too much, while being inefficient and costly. Therefore, the solution involves only small current charging/discharging, and the solution cannot be applied to a field requiring big current and fast charging/discharging, significantly wasting an economic value and advantage of the big current and fast charging/discharging characteristic of a lithium battery. At present, there is not an effective solution for the problem of inefficient charging/discharging in a case where there is no overcurrent during charging of a rechargeable battery.

FIG. 2A is a schematic diagram of a battery apparatus. As shown in FIG. 2A, the battery apparatus includes: a battery unit U1 and a charging/discharging apparatus. The charging/discharging apparatus includes a processor U2, a voltage measuring unit D1, a current limiting unit U3, and a switch unit U4. The current limiting unit U3 is connected in parallel with the switch unit U4 and then connected in series with the battery unit U1 and the power supply Y1 for charging the battery unit. The processor U2 is connected to the voltage measurement unit D1, the current limiting unit U3, and the switch unit U4. The voltage measurement unit D1 is connected to both ends of the battery unit U1, and the voltage measurement unit D1 is connected to both ends of the power supply Y1. Herein, a load device RL (not shown in FIG. 2A) may be connected between two ends A and B of the power supply Y1. Herein, the battery unit U1 and the power supply Y1 may supply power to the load device RL. When the power supply Y1 is not powered off, the power supply Y1 supplies power to the load device RL. When the power supply Y1 is powered off, the battery unit U1 supplies power to the load device RL.

The voltage measurement unit D1 is configured to measure a voltage over two ends of the power supply Y1, and a voltage over two ends of the battery unit U1.

The processor U2 is configured to control the voltage measurement unit D1, and to control access states of the current limiting unit U3 and the switch unit U4 according to the voltages measured by the voltage measurement unit D1, so as to implement charging/discharging of the battery unit U1 by at least one of the current limiting unit U3 and the switch unit U4.

The current limiting unit U3 is configured to be switched on or switched off based on the processor U2's control, and to provide a charging branch with a limited current upon switching on; the current limiting unit U3 being switched off is equivalent to that the current limiting unit U3 is switched off in the circuit.

The switch unit U4 is configured to provide a charging branch with unlimited current, and to switch on or switch off the charging branch with unlimited current based on the processor U2's control.

Different charging manners may be selected according to the voltage of the battery unit and the voltage of the power supply, thereby providing a big current charging solution and achieving a fast charging. By controlling a current limiting branch and a fast charging branch to charge and discharge in an alternate and time-sharing manner, it is possible to promote charging/discharging efficiency of the battery, reduce consumption, save charging time, and save charging energy while ensuring that there is no overcurrent for charging the rechargeable battery. In this way, safety of the rechargeable battery, and the economic value of low cost and efficient charging are guaranteed.

The battery unit U1 includes at least one battery which may, for example, be a lithium battery. The battery unit U1, as a backup power supply, may be but not limited to a lithium iron phosphate battery, a lithium ternary battery, or a lithium cobalt oxide battery.

The current limiting unit U3 may, for example, be a power conversion unit composed of an element and a route with a fixed maximum current power. The current limiting unit U3 is configured for charging current limitation to solve the problem of overcurrent charging.

The switch unit U4 may, for example, be a switch element or a switch element combination capable of controlling current in a single direction. Specifically, the switch unit U4 may include only one switch or a plurality of switches, or a combination of a plurality of switches and a plurality of diodes.

The processor U2 compares voltages of the power supply Y1 and the battery unit U1, and controls the access states of the current limiting unit U3 and the switch unit U4 according to a comparison result.

The processor U2 is configured to control, according to the voltages measured by the voltage measurement unit D1, access states of the current limiting unit U3 and the switch unit U4 to implement charging/discharging of the battery unit U1 by at least one of the current limiting unit U3 and the switch unit U4, including: switching off the charging branch of the switch unit U4 and switching on the current limiting unit U3 when a difference between a voltage of the power supply Y1 and a voltage of the battery unit U1 is greater than or equal to a first threshold U0, so as to charge the battery unit U1 through the current limiting unit U3, which is in a current limiting charging state; and switching off the current limiting unit U3 and switching on the charging branch of the switch unit U4 when the difference between the voltage of the power supply Y1 and the voltage of the battery unit U1 is smaller than the first threshold U0, so as to charge the battery unit U1 through the switch unit, which is in a non-current-limiting charging state or fast charging state.

The first threshold value may be set as required, or may be determined through an experiment.

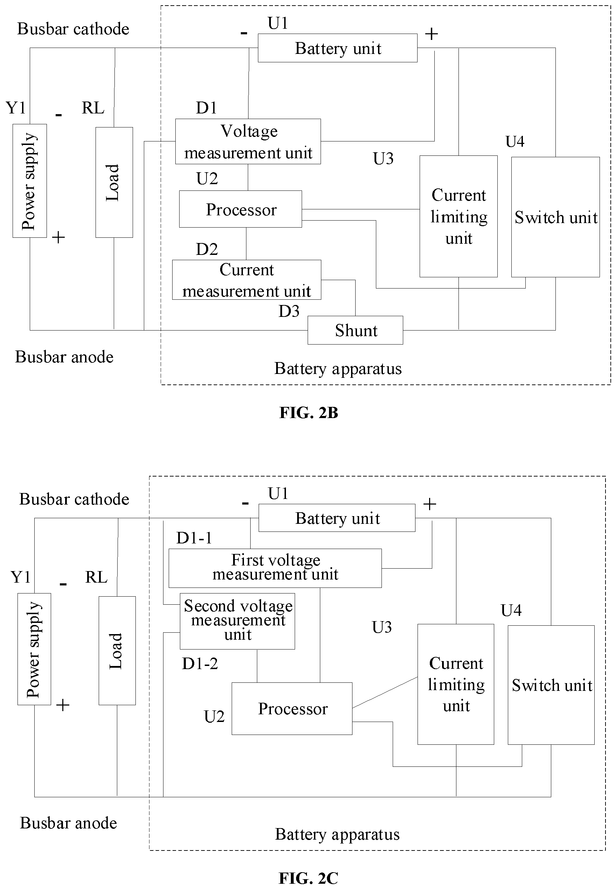

FIG. 2B is a schematic diagram of another battery apparatus according to an embodiment of the present disclosure. Compared with the battery apparatus shown in FIG. 2A, the battery apparatus shown in FIG. 2B further includes a current measurement unit D2 and a shunt D3, where the current measurement unit D2 is connected with the shunt D3 and the processor U2, and the shunt D3 is connected to a charging/discharging branch in the battery unit U1 (FIG. 2B is only a schematic diagram, but the shunt D3 may further be connected at another position, as long as discharging current and charging current can be detected).

The current measurement unit D2 is configured to measure a discharging current or a charging current of the battery unit U1.

The processor U2 is further configured to control, according to the discharging current or the charging current measured by the current measurement unit D2, the access states of the current limiting unit U3 and the switch unit U4 to implement charging/discharging of the battery unit by at least one of the current limiting unit U3 and the switch unit U4.

According to the embodiment of FIG. 2B, the processor U2 is further configured to control, according to the discharging current or the charging current measured by the current measurement unit D2, the access states of the current limiting unit U3 and the switch unit U4 to implement charging/discharging of the battery unit by at least one of the current limiting unit U3 and the switch unit U4, including: when the current limiting unit U3 is switched off, the charging branch of the switch unit U4 is switched on, and the current measured by the current measurement unit D2 is greater than or equal to a second threshold Imax, the charging branch of the switch unit U4 is switched off and the current limiting unit U3 is switched on. That is, current is detected in a fast charging state, and the state is switched to a current limiting charging state when current is too large. The fast charging state is maintained if the current is smaller than the second threshold.

In the embodiment of FIG. 2B, the processor U2 may be further configured to, adjust a current value of the current limiting unit U3 after the current limiting unit U3 is switched on. A current value in a circuit is controlled in this manner so that the charging current does not exceed a current limiting value of 1Lm. The current limiting unit U3 is a switch circuit as a secondary bypass connected in parallel with a main circuit charging/discharging switch. The current limiting unit U3 includes, but not limited to, a DC power converting circuit, a current limiting board, a BUCK circuit or a BUCK-BOOST circuit, and so on. The current limiting unit U3 controls on and off of a metal-oxide-semiconductor field-effect transistor (MOSFET) in a current limiting branch in a pulse width modulation (PWM) manner, thereby controlling the charging current and implementing small current current limiting charging.

According to the embodiment of the present disclosure, the switch unit U4 is further configured to provide a unidirectional discharging branch, for example, a branch formed by a diode and a switch element connected in series, based on the processor U2's control. A conduction direction of the diode is a discharging current direction of the battery unit. It shall be noted that there may be an overlap between elements of the charging branch and the unidirectional discharging branch in the switch unit U4, i.e., the charging branch and the unidirectional discharging branch may share one element.

According to the embodiment of the present disclosure, the processor U2 is further configured to switch on the unidirectional discharging branch of the switch unit U4 initially (i.e., before charging or before comparing voltage values of the power supply Y1 and the battery unit U1). That is, a discharging branch is provided so that when the power supply Y1 is powered off, the battery unit U1 may supply power to the load device RL timely to avoid discontinuation of power supply. At this time, it is called an online non-floating state, under which both the charging branch of the switch unit U4 and the current limiting unit U3 are in a switched-off state.

According to the embodiment of the present disclosure, the processor U2 is further configured to, when the battery unit U1 is fully charged, switch off the charging branch of the switch unit U4, switch on the unidirectional discharging branch of the switch unit U4, and switch off the current limiting unit U3. Overcharge to the battery unit U1 may be avoided by a timely switch off after charging is completed. Whether the battery unit U1 is fully charged may be determined through whether the voltage over two ends of the battery unit U1 and the charging current reach a preset threshold. At this time, it is the online non-floating state.

According to the embodiment of the present disclosure, the processor U2 is further configured to, when the power supply Y1 is powered off and the current measured by the current measurement unit D2 is smaller than a third threshold Imin, switch off the charging branch of the switch unit U4 and switch off the current limiting unit U3. After the power supply Y1 is powered off, discharging is performed through the unidirectional discharging branch. Herein, the third threshold may be set as required. This is applicable to a case where the load RL needs a small current. At this time, it is the online non-floating state.

According to the embodiment of the present disclosure, the processor U2 is further configured to, when the power supply Y1 is powered off and the current measured by the current measurement unit D2 is greater than the third threshold Imin, switch off the current limiting unit U3 and switch on the charging branch of the switch unit U4. After the power supply Y1 is powered off, discharging is performed through the unidirectional discharging branch and the charging branch of the switch unit U4. This state is defined as a discharging-charging state, which is logically consistent with the fast charging state and the states may be converted freely, thereby high rate charging/discharging is implemented.

According to the embodiment of the present disclosure, the switch unit U4 includes a first switch, a second switch and a first diode, the first diode and the second switch being connected in series, the first switch being connected in parallel to two ends of a series branch configured by the first diode and the second switch, and a conduction direction of the first diode being a discharging current direction of the battery unit. At this time, the charging branch is a circuit composed by the first switch, and the discharging branch is a circuit composed by the second switch and the first diode.

Alternatively, the switch unit U4 includes the first switch and the second switch connected in series and the first diode connected in parallel to two ends of the first switch, the conduction direction of the first diode being the discharging current direction of the battery unit. At this time, the charging branch is a circuit composed by the first switch, and the discharging branch is a circuit composed by the first switch and the first diode.

Alternatively, the switch unit U4 includes the first switch and the second switch connected in series, the first diode connected in parallel to the two ends of the first switch, and a second diode connected in parallel to two ends of the second switch, where the conduction direction of the first diode being the discharging current direction of the battery unit, and a conduction direction of the second diode being a charging current direction for charging the battery unit.

It shall be noted that the switch unit U4 may otherwise include only the first switch. In addition, the above first switch, the second switch may be substituted by using more switches. The above first diode and second diode may be substituted by using more diodes.

FIG. 2C is a schematic diagram of yet another battery apparatus. As shown in FIG. 2C, the voltage measurement unit D1 includes a first voltage measurement unit D1-1 and a second voltage measurement unit D1-2. The first voltage measurement unit D1-1 is connected to two ends of the battery unit U1, and is configured to measure voltage of the battery unit U1. The second voltage measurement unit D1-2 is connected to two ends of the power supply Yi, and is configured to measure voltage of the power supply Y1.

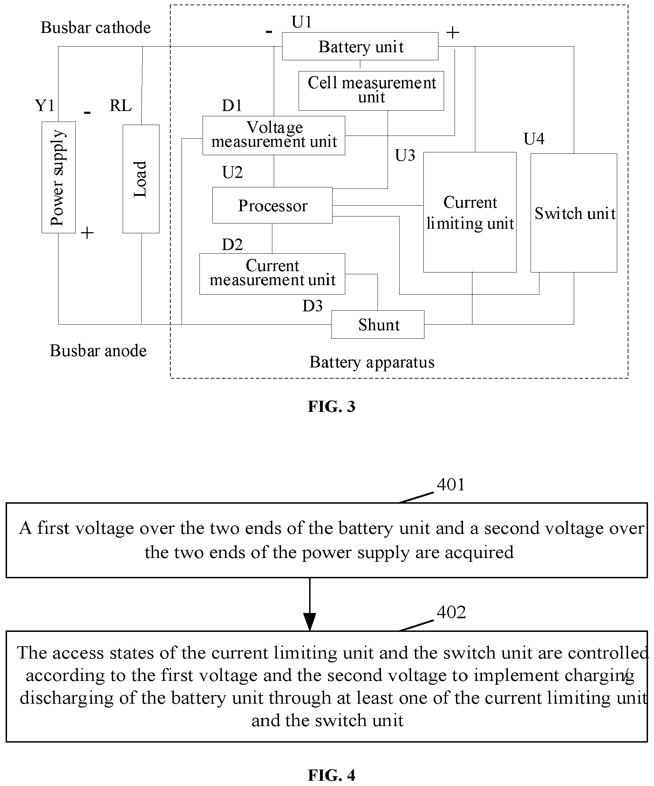

FIG. 3 is a schematic diagram of still another battery apparatus. As shown in FIG. 3, the charging/discharging apparatus further includes a cell measurement unit D4 connecting the battery unit U1 and the processor U2.

The cell measurement unit D4 is configured to measure a cell voltage and a cell temperature in the battery unit U1.

The processor U2 is further configured to control the access states of the current limiting unit U3 and the switch unit U4 according to the cell voltage and the cell temperature. For example, when the cell voltage or the cell temperature is too high, charging is stopped, i.e., the current limiting unit U3, the charging branch of the switch unit U4 or the discharging branch of the switch unit U4 may be switched off.

FIG. 4 is a flowchart of a charging/discharging control method. As shown in FIG. 4, the charging/discharging control method is applied to the above charging/discharging apparatus. The charging/discharging control method includes steps 401 and 402.

In step 401, a first voltage over the two ends of the battery unit and a second voltage over the two ends of the power supply are acquired.

In step 402, the access states of the current limiting unit and the switch unit are controlled according to the first voltage and the second voltage to implement charging/discharging of the battery unit through at least one of the current limiting unit and the switch unit.

The access states of the current limiting unit and the switch unit are controlled according to the first voltage and the second voltage to implement charging/discharging of the battery unit through at least one of the current limiting unit and the switch unit, including: switching off the charging branch of the switch unit and switching on the current limiting unit when a difference between the second voltage of the power supply and the first voltage of the battery unit is greater than or equal to the first threshold U0, so as to charge the battery unit through the current limiting unit; and switching off the current limiting unit and switching on the charging branch of the switch unit when the difference between the second voltage of the power supply and the first voltage of the battery unit is smaller than the first threshold U0, so as to charge the battery unit through the switch unit.

The method further includes: acquiring the charging current or the discharging current of the battery unit; controlling the access states of the current limiting unit and the switch unit according to the charging current or the discharging current to implement the charging/discharging of the battery unit through at least one of the current limiting unit and the switch unit.

The access states of the current limiting unit and the switch unit are controlled according to the charging current or the discharging current to implement the charging/discharging of the battery unit through at least one of the current limiting unit and the switch unit, including: switching off the charging branch of the switch unit and switching on the current limiting unit when the current limiting unit is switched off, the charging branch of the switch unit is switched on, and the discharging current is greater than or equal to the second threshold.

The method further includes switching on the unidirectional discharging branch of the switch unit initially.

The method further includes switching off the charging branch of the switch unit, switching on the unidirectional discharging branch of the switch unit, and switching off the current limiting unit when the battery unit is fully charged.

The method further includes switching off the current limiting unit and switching on the charging branch of the switch unit when the power supply is powered off.

The method further includes switching off the current limiting unit and switching off the charging branch of the switch unit when the power supply is powered off and the discharging current is smaller than the third threshold.

The method further includes switching off the current limiting unit and switching on the charging branch of the switch unit when the power supply is powered off and the discharging current is greater than the third threshold.

A plurality of power supplies Y1, a plurality of load devices RLs and a plurality of battery apparatuses may be included.

The switch unit U4 may be controlled so that a conduction direction of the switch unit U4 is consistent with a current direction required in a circuit where the switch unit U4 is located, and that the battery unit may be discharged unidirectionally or may be charged and discharged bidirectionally.

The method further includes: in a case where the power supply Y1 is powered off, the charging branch of the switch unit U4 is controlled to be switched on, and the current limiting unit U3 is switched off.

The method further includes: in a case where the power supply Y1 is powered off, the unidirectional discharging branch of the switch unit U4 is switched on, the charging branch of the switch unit U4 is switched off, and the current limiting unit U3 is switched off.

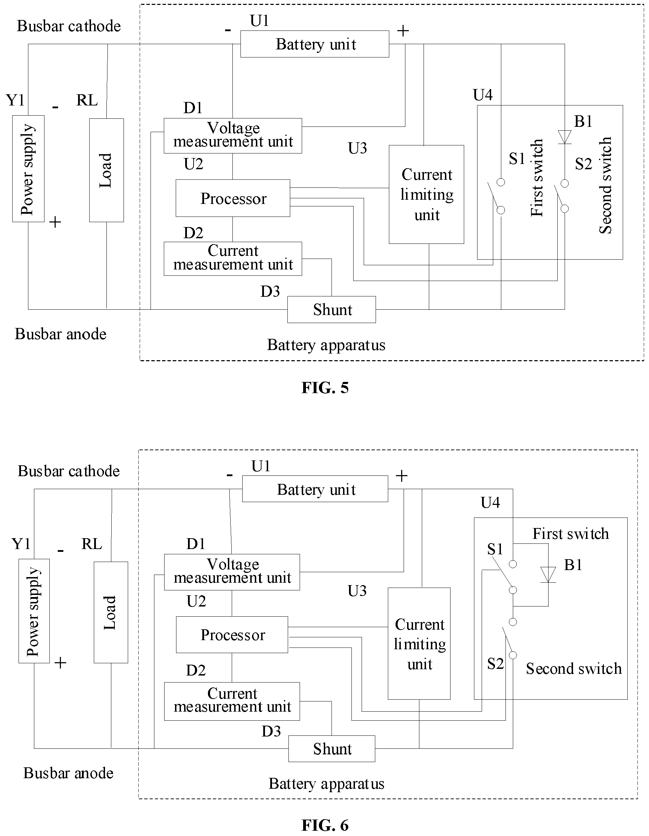

FIG. 5 is a schematic diagram of still another battery apparatus according to an embodiment of the present disclosure. In the battery apparatus, the charging branch and the discharging branch are separated, the previous embodiments may be referred to for the units other than the switch unit U4. As shown in FIG. 5, the switch unit U4 includes a first switch S1 and a second switch S2. A unidirectional limitation is added to the discharging branch, that is, the discharging branch further includes a first diode B1. Herein, the first diode B1 is connected in series with the second switch S2, the first switch S1 is connected in parallel to both ends of a series branch formed by the first diode B1 and the second switch S2. A conduction direction of the diode B1 is consistent with a current direction (i.e., discharging current direction of the battery unit U1) of the branch (discharging branch) where the diode B1 is located. In the embodiment, the charging branch is a circuit composed of the first switch S1, and the discharging branch is a circuit composed of the second switch S2 and the first diode B1.

It shall be noted that, in another embodiment, the switch unit U4 only includes the first switch S1.

Based on the circuit shown in FIG. 5, in order to ensure safety and maintenance of the battery unit U1, the processor U2 is further configured to control the second switch S2 to be switched off before comparing a second voltage of the power supply Y1 with a first voltage of the battery unit U1.

According to the embodiment of FIG. 5, in order to ensure safety and avoid overcurrent of the battery unit, the processor U2, based on a comparison result, controls the current limiting unit U3 and the first switch S1 to charge the battery unit U1, including: if a difference between the second voltage of the power supply Y1 and the first voltage of the battery unit U1 is greater than or equal to the first threshold U0, the processor controls the first switch S1 to be switched off, the second switch S2 to be switched on, and the current limiting unit U3 to be switched on; alternatively, if the difference between the second voltage of the power supply Y1 and the first voltage of the battery unit U1 is smaller than the first threshold U0, the processor controls the first switch S1 to be switched on, the second switch S2 to be switched off, and the current limiting unit U3 to be switched off.

According to the embodiment of FIG. 5, in order to ensure that the current of the battery unit U1 does not become overcurrent, the apparatus also performs current monitoring. That is, after the difference between the second voltage of the power supply Y1 and the first voltage of the battery unit U1 is smaller than the first threshold U0, and the first switch S1 is controlled to be switched on, the processor U2 also detects a charging current value I, and compares the charging current value I with the second threshold Imax. If the charging current value I is greater than or equal to the second threshold Imax, the processor U2 controls the first switch S1 to be switched off, the second switch S2 to be switched on and the current limiting unit U3 to be switched on.

According to the embodiment of the present disclosure, the processor U2 is further configured to, after the current limiting unit U3 is started, adjust current of the current limiting unit U3 to control a current value in the circuit.

According to the embodiment of the present disclosure, the processor U2 is further configured to, after the first switch S1 is controlled to be switched on and in a case where the battery unit U1 is fully charged, control the first switch S1 to be switched off, the second switch S2 to be switched on, the current limiting unit U3 to be switched off so as to stop charging.

According to the embodiment of the present disclosure, the processor U2 is further configured to, in a case where the power supply Y1 is powered off, control the first switch S1 to be switched on, and the current limiting unit U3 to be switched off.

According to the embodiment of the present disclosure, the processor U2 is further configured to, in a case where the power supply Y1 is powered off, control the first switch S1 to be switched off, the second switch S2 to switched on to implement discharging of the battery unit U1.

A whole process of charging/discharging the above battery apparatus is described in the following. Initially, the current limiting unit U3 is switched off, the first switch S1 is switched off, and the second switch S2 is switched on. When charging starts, a difference between voltages of the power supply Y1 and the battery unit U1 is greater than or equal to the first threshold U0. At this time, the current limiting unit U3 is switched on, the first switch S1 is switched off, and the charging continues until the difference between the second voltage of the power supply Y1 and the first voltage of the battery unit U1 is smaller than the first threshold U0. At this time, the current limiting unit U3 is switched off, the first switch S1 is switched on, and the battery unit U1 is charged through the branch where the first switch S1 is located (if the current is too large, then switch back to the current limiting unit U3 for charging) until the battery unit U1 is fully charged. At this time, the first switch S1 and the current limiting unit U3 are switched off. If the power supply Y1 is powered off, the battery unit U1 supplies power. At this time, the first switch S1 may be switched on to keep the current limiting unit U3 switched off.

According to the embodiment of the present disclosure, the difference between the second voltage of the power supply Y1 and the first voltage of the battery unit U1 is greater than or equal to the first threshold U0. At this time, the current limiting unit U3 is switched on and the first switch S1 is switched off. Charging continues until the difference between the second voltage of the power supply Y1 and the first voltage of the battery unit U1 is smaller than the first threshold U0. At this time, the current limiting unit U3 is switched off, and the first switch S1 is switched on, and charging is performed through the branch where the first switch S1 is located (if the current is too large, switch back to charging with the current limiting unit U3). If the power supply Y1 is powered off at any time before the battery is fully charged, the current limiting unit S3 is switched off and the first switch S1 may either be switched on or not, which may be determined according to comparison between the current in the circuit and the third threshold. If the current in the circuit is greater than or equal to the third threshold, the first switch S1 is closed. It shall be noted that the second switch S2 remains on during this process. If the discharging current is too large or if another abnormality occurs, the first switch S1 may be switched off, and the second switch S2 may be switched off.

FIG. 6 is a schematic diagram of still another battery apparatus. As shown in FIG. 6, the switch unit U4 includes the first switch S1 and the second switch S2 that are connected in series. A unidirectional limitation is added to the discharging branch, that is, the discharging branch of the circuit further includes a first diode B1. Herein, the first diode B1 is connected in parallel with the first switch S1, and the conduction direction of the first diode B1 is consistent with the current direction (i.e., the discharging current direction of the battery unit U1) of the branch where the first diode B1 is located. After being fully charged, the battery unit U1 is not allowed to continue to be charged. The first switch S1 is switched off, the second switch S2 is switched on, and it is monitored that the discharging current flows through the diode B1 and the discharging switch S2 to discharge. When a big current is needed for discharging, the processor U2 controls the first switch S1 to be switched on, and the second switch S2 to be switched on to perform discharging. In this case, the charging branch may be a circuit composed of a first switch S1 and a second switch S2, and the discharging branch is a circuit composed of the first diode B1 and the second switch S2.

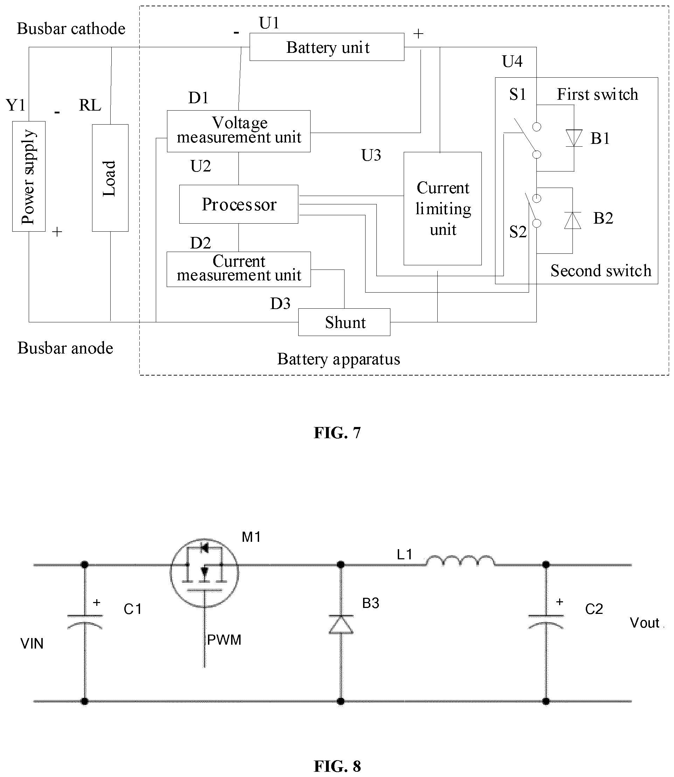

FIG. 7 is a schematic diagram of still another battery apparatus. In FIG. 7, the distinctive part over previous battery apparatuses is the switch unit U4. In this case, the switch unit U4 includes the first switch S1 and the second switch S2. Here the second switch S2 is connected in series with the first switch S1, and the series branch of the second switch S2 and the first switch S1 is connected in parallel with the current limiting unit U3. A unidirectional limitation is added to the discharge branch, that is, the switch unit U4 further includes the first diode B1 and the second diode B2. Here the first diode B1 is connected in parallel with the first switch S1, and the second diode B2 is connected in parallel with the second switch S2. Conduction directions of the first diode B1 and the second diode B2 are consistent with the current direction of the branch where the first diode B1 and the second diode B2 are located. That is, the conduction direction of the first diode B1 is the direction of the discharging current of the battery unit U1, and the conduction direction of the second diode B2 is the direction of the charging current of the battery unit U1. After being fully charged, the battery is not allowed to continue to be charged. The first switch S1 is switched off, the second switch S2 is switched on, and it is monitored that the discharging current flows through the first diode B1 and the second switch S2 to perform discharging. When a transient small current charge is required, the processor U2 controls the first switch S1 to be switched on and the second switch S2 to be switched off for charging. When a large current discharge is required, the processor U2 controls the first switch S1 to be switched on, and the second switch S2 to be switched on for discharging.

It shall be noted that the cell measurement unit D4 shown in FIG. 3 may be added to the apparatus shown in FIGs 5 to 7. In addition, the switch unit provided in the schematics shown in FIGs 5 to 7 may be applied to any embodiment in the present disclosure.

Further detailed description is provided in the following with the embodiment shown by FIG. 5 as an example.

As shown in FIG. 5, the current limiting unit U3 is connected in parallel to both ends of the switch unit U4 to form a circuit switch controlled by the processor U2. This circuit switch is connected in series with the battery unit U1 and the power supply Y1 in sequence to form a battery charging circuit. When the power supply Y1 is powered off, the circuit switch is connected in series with the battery unit U1 and the load RL in sequence to form a battery discharge circuit. The processor U2 is configured for detection and sampling of voltage, current, temperature, etc., and controls and manages safe and reliable operation of the battery unit. The apparatus mainly includes but not limited to the following parts (in the dashed box): the battery unit U1, the processor U2, the first switch S1, the second switch S2, the current limiting unit U3, the voltage measuring unit D1, the current measuring unit D2 and the shunt D3.

The battery unit U1 includes lithium battery cells (or known as cells) connected in series and in parallel. The charging/discharging state of the battery unit U1 is controlled by the circuit switch. The circuit switch includes the switch unit U4 and the current limiting unit U3. The current limiting unit U3 is connected in parallel to both ends of the switch unit U4. Here the discharging branch is composed of the first diode B1 for anti-reverse and the second switch S2 connected in series, and the first switch S1 is connected in parallel to both ends of the discharge branch to form the switch unit U4. In the entire circuit switch, the first switch S1, the second switch S2, and the current limiting unit U3 are all controlled by the processor U2.

During a process of charging the battery, the processor U2 detects a voltage Uy of the power supply Y1 in real time through the voltage measurement unit D1-1, and detects a voltage Ub of the battery unit U1 in real time through the voltage measurement unit D1-2. When a voltage difference △V(△V=Uy-Ub) between Uy and Ub is greater than or equal to the first threshold U0, that is, △V>=U0, the voltage difference is so large that there is a risk of overcurrent. At this time, the first switch S1 is controlled to be switched off, the second switch S2 to be switched on, and operation of the current limiting unit U3 is started. The battery unit U1 performs current limiting charging with a small current through the current limiting unit U3, so as to prevent overcurrent charging. When the voltage difference ΔV is smaller than the first threshold U0, that is, ΔV<U0, there may be no risk of overcurrent charging. At this time, the processor U2 controls the first switch S1 to be switched on, the current limiting unit U3 to be switched off so as not to operate, and the battery unit U1 is charged with a large current through the first switch S1. If charging is performed through the first switch S1, the processor U2 detects through the shunt D3 that a circuit current I exceeds the second threshold Imax, that is, I>Imax, then the processor U2 controls the first switch S1 to be switched off and the second switch S2 to be switched on, the current limiting unit U3 is started, and current limiting charging or discharging is started. When the power supply Y1 is powered off, the charging stops, the processor U2 controls the first switch S1 to be switched on, the second switch S2 to be switched on, the current limiting unit U3 is switched off so as not to operate, and the discharging process is started. Here the first switch S1 is a big current branch, and the circuit formed by the second switch S2 is a small current branch. This solution can not only prevent the battery unit from being charged with overcurrent, but also guarantees charging efficiency.

In this embodiment, the current limiting unit and the switch unit are connected in parallel, and there are two charging manners for selection during a charging process. The processor detects the circuit voltage and current in real time, compares and judges the voltage difference and current with preset thresholds, and reasonably selects the fast charging manner or the current limiting charging manner for charging, thereby providing a fast charging solution. In addition, through the current limiting charging manner, overcurrent protection is implemented. Controlled by the processor, the current limiting unit may exit the charging circuit at an appropriate time while starting the switch unit to perform charging, so as to ensure big current charging and shorten charging time, thereby the problem of inefficient charging is solved. This method is simple, reliable, cost-effective and easy to be implemented.

In the battery apparatus, an anode of the battery unit may be connected to an anode of the power supply as a shared ground terminal. The power supply Y1 and the load device RL are configured to describe an application scenario of the present disclosure. The power supply Y1 is configured to charge the battery and supply power to the load device RL, and the load device RL is an equivalent load of an actual electric device.

It shall be noted that a cathode of the battery unit may be connected to a cathode of the power supply, and the cathode is configured to be the shared ground terminal.

The current limiting unit U3 may be implemented by, for example, a BUCK circuit. FIG. 8 shows a BUCK circuit, which controls an output current value by adjusting PWM. The circuit includes: one end of a first capacitor C1 is connected to a drain of a MOS tube M1, a PWM signal is input to a gate of the MOS M1, a source of the MOS M1 is connected to a cathode of a third diode B3, the other end of the first capacitor C1 is connected to the cathode of the third diode B3, one end of an inductor L1 is connected to the cathode of the third diode B3, the other end of the inductor L1 is connected to one end of a second capacitor C2, and the other end of the second capacitor C2 is connected to an anode of the third diode B3.

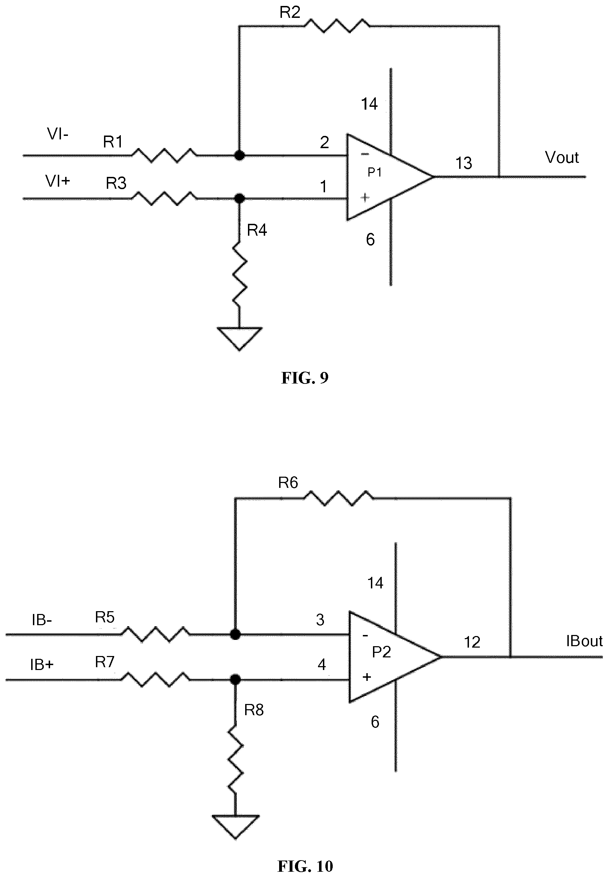

The first voltage measurement unit D1-1 detects voltage of a cathode of the power supply, i.e., power supply voltage Uy, and the second voltage measurement unit D1-2 detects voltage of a cathode of the battery unit, i.e., the battery unit voltage Ub. FIG. 9 shows a voltage measurement unit. The voltage measurement unit includes one end of a resistor R1 is a first voltage input end (VI-), the other end of the resistor R1 is connected to an inverting input end of an operational amplifier P1, one end of a resistor R2 is connected to the inverting input end of the operational amplifier P1, the other end of the resistor R2 is connected to an output end of the operational amplifier P1; one end of a resistor R3 is a second voltage input end (VI+), and the other end of the resistor R3 is connected to a noninverting input end of the operational amplifier P1, one end of a resistor R4 is connected to the noninverting input end of the operational amplifier P1, and the other end of the resistor R4 is grounded.

A voltage of the output end of the operational amplifier P1 meets the equation: Vout=((VI+)-(VI-))^{∗}R2/R1, and then is restored to a digitalized voltage value through ADC. The first voltage measurement unit D1-1 may be implemented through the voltage measurement unit shown in FIG. 9, and the second voltage measurement unit D1-2 may be implemented through the voltage measurement unit shown in FIG. 9.

The current measurement unit D2 is configured to detect a circuit current, i.e., a charging or discharging current I. The shunt D3 is configured to sample a circuit current. The shunt D3 may be but not limited to a Hall sensor, a current transformer, a shunt, a resistance detector or the like. FIG. 10 shows a current measurement unit D2, including: one end of a resistor R5 is a first current input end (IB-), the other end of the resistor R5 is connected to an inverting input end of an operational amplifier P2, one end of a resistor R6 is connected to the inverting input end of the operational amplifier P2, the other end of the resistor R6 is connected to an output end of the operational amplifier P2; one end of a resistor R7 is a second current input end (IB+), the other end of the resistor R7 is connected to a noninverting input end of the operational amplifier P2, one end of a resistor R8 is connected to the noninverting input end of the operational amplifier P2, the other end of the resistor R8 is grounded.

A current output through the output end of the operational amplifier P2 meets this equation: IBout=((IB+)-(IB-))*R4/R3, and then is restored to a digitalized current value through ADC.

The first switch S1 and the second switch S2 may be any kind of controlled switching characteristic components which may be but not limited to a contactor, a relay, a MOSFET, an insulated gate bipolar transistor (IGBTs) or the like.

According to the embodiment of the present disclosure, the first threshold, the second threshold, and the third threshold are all control parameters in the processor, and the parameters may be set or preset by software.

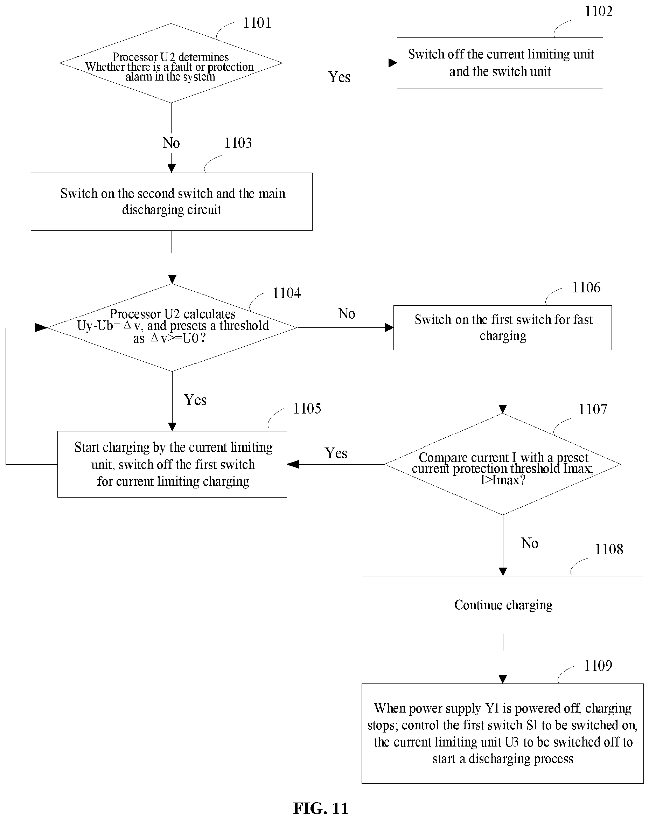

FIG. 11 is a flowchart of a charging/discharging control method according to an embodiment of the present disclosure. As shown in FIG. 11, the method of charging/discharging the battery unit using the battery apparatus shown FIG. 5 includes steps 1101 to 1109.

In step 1101, before the battery charging starts, the processor U2 determines whether there is a fault or protection alarm in the system; if not, step 1103 is performed, if yes, step 1102 is performed.

In step 1102, the current limiting unit U3 is switched off, the switch unit U4 is switched off, and the process ends.

In step 1103, the second switch S2 is closed, thereby the discharging circuit is switched on to ensure that discharge can be performed at any time.

In step 1104, the processor U2 detects the voltage Uy of the power supply Y1 in real time through the voltage measurement unit D1-1, and detects the voltage Ub of the battery unit U1 in real time through the voltage measurement unit D1-2; the processor U2 compares the voltage difference △V between Uy and Ub with the first threshold U0, thereby controlling the charging manner. If the voltage difference △V (△V=Uy-Ub) between Uy and Ub is greater than or equal to the first threshold U0, i.e., △V>=U0, step 1105 is performed. If the voltage difference △V is smaller than the first threshold U0, i.e., △V<U0, step 1106 is performed.

In step 1105, if the voltage difference is too large (or a circuit current is too large), there is a risk of overcurrent charging. At this time, the processor U2 controls the first switch S1 to be switched off and the current limiting unit U3 to be switched on, the battery unit U1 is charged with limited current through the current limiting unit U3.

According to the embodiment of the present disclosure, the current limiting unit U3 is a power conversion switch circuit. The processor U2 controls on and off of the MOS in the current limiting unit U3 in a PWM manner, in which the processor U2 controls size of a current output by the current limiting unit U3 by adjusting in real time a PWM waveform duty ratio, controlling the current in the current limiting unit U3 within a preset threshold range to prevent overcurrent charging. According to the embodiment of the present disclosure, the current limiting unit U3 may otherwise be a functional unit with an independent current output limiting function. The processor U2 sends a current limiting command to the current limiting unit U3, and the current limiting unit U3 performs current output limiting charging according to the current limiting command, so as to achieve a goal of non-overcurrent charging.

In step 1106, the voltage difference is small and there is no risk of overcurrent charging. The processor U2 controls the first switch S1 to be switched on and the current limiting unit U3 to be switched off. The battery unit U1 is charged through the first switch S1, may be charged with a big current to achieve the objective of fast battery charging.

In step 1107, at a state of charging through the first switch S1, the processor U2 detects the circuit current I through the current measurement unit D2, and determines whether the circuit current I exceeds the second threshold Imax. If I>Imax, step 1105 is performed; and if I<Imax, step 1108 is performed.

In step 1108, it is maintained that charging continues through the first switch S1.

In step 1109, when the power supply Y1 is powered off, charging stops. Because the second switch S2 is switched off, discharging starts immediately. The processor U2 determines that the discharging state starts by detecting the power supply voltage Uy and the discharging current I. Therefore, the first switch S1 is controlled to be switched on, the current limiting unit U3 is switched off to start a discharging process.

It shall be noted that in another embodiment, when the power supply Y1 is powered off during the charging process through the current limiting unit U3, the charging stops, and the processor U2 immediately controls the first switch S1 to be switched on, the current limiting unit U3 to be switched off, the current limiting unit U3 exits operation, and discharging starts.

The technical solution of this embodiment not only prevents the battery unit from overcurrent discharging, but also ensures charging efficiency thereof.

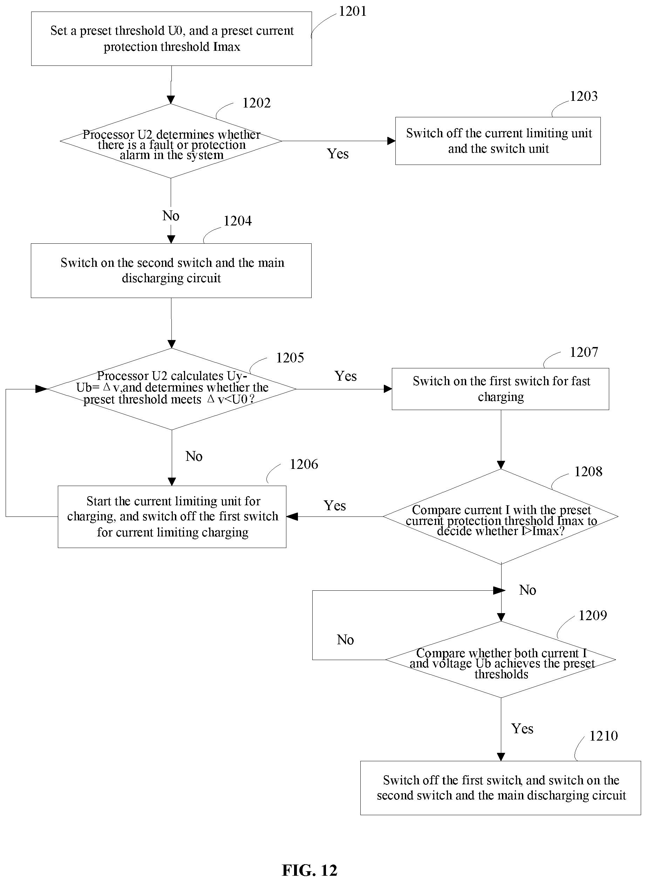

FIG. 12 is a flowchart of another charging/discharging control method according to an embodiment of the present disclosure. As shown in FIG. 12, the method of charging/discharging the battery unit using the battery apparatus shown FIG. 7 includes steps 1201 to 1210.

In step 1201, values of the first threshold U0 and the second threshold Imax are set in the processor U2.

In step 1202, after the processor U2 is started and initialized, a system protection mechanism and fault are detected; if it is detected that the system is not protected and that there is a serious fault, step 1203 is performed, otherwise, step 1204 is performed.

In step 1203, the current limiting unit U3 is switched off and the switch unit U4 is switched off, and the process ends.

In step 1204, the second switch S2 is switched on to ensure a discharging capacity.

In step 1205, the processor U2 detects the power supply voltage Uy in real time through the voltage measurement unit D1-1, and detects the battery unit voltage Ub in real time through the voltage measurement unit D1-2. The processor U2 compares the voltage difference ΔV between the power supply voltage and the battery voltage with a preset voltage difference value; if ΔV<U0, step 1207 is performed, if ΔV>=U0, step 1206 is performed.

When the power supply Y1 is powered on and battery charging starts, the processor U2 calculates and judges the voltage difference ΔV between the power supply voltage and the battery voltage and the first threshold U0 in real time, and controls operation manners of the first switch S1, the second switch S2 and the current limiting unit U3.

In step 1206, the processor U2 controls the first switch S1 to be switched off and the current limiting unit U3 to be switched on, and the battery unit performs current limiting charging through the current limiting unit U3. During the current limiting charging process, the battery voltage rises with charging, and the voltage difference ΔV gradually changes accordingly. Therefore, it is necessary to re-compare ΔV and U0, and perform step 1205.

In step 1207, the processor U2 controls the first switch S1 to be switched on and the current limiting unit U3 to be switched off, that is, the current limiting unit U3 does not operate, and the battery unit is charged through the switch unit U4, step 1208 is performed.

In step 1208, the processor controls the current measurement unit D2 to operate, detects the current I in real time, compares it with the second threshold Imax, and controls the current limiting unit U3 and the switch unit U4 according to the comparison result. If during the charging process, the processor U2 detects that the circuit current I is greater than or equal to the second threshold Imax, step 1206 is performed, and when I is smaller than the second threshold Imax, step 1209 is performed.

In another embodiment, when the circuit current I is greater than or equal to the second threshold Imax, and which lasts for an appointed time period, step 1206 is performed.

When charging starts, after current limiting starts, the processor U2 controls on and off of the MOS on the branch of the current limiting unit U3 in the PWM manner, and then controls the size of the current output by the current limiting unit U3 by adjusting in real time the PWM waveform duty ratio, controlling the current in the current limiting unit within a preset threshold range to prevent overcurrent charging. Alternatively, the current limiting unit U3 may be a functional unit with an independent current output limiting function. The processor U2 sends a current limiting command to the current limiting unit U3, and the current limiting unit U3 automatically performs current output limiting charging.

In step 1209, it is determined whether the battery unit enters a fully charged state (the current I and the voltage Ub reach the preset threshold), if yes, step 1210 is performed, otherwise, it is determined again whether the battery unit enters the fully charged state.

In step 1210, the processor U2 controls the first switch S1 to be switched off, the second switch S2 is kept switched on, and the battery enters a dischargeable and non-chargeable state. When the battery is fully charged, battery floating charging may be prevented as long as the charging branch is switched off, discharging is not affected, thereby ensuring that the discharging branch is available at all time.

When the first switch S1 is switched off and the second switch S2 is switched on, and the system is in the dischargeable and non-chargeable state, the power supply Y1 is powered off, the battery unit U1 starts to discharge, and the processor U2 detects that the discharging current I is greater than the preset threshold (e.g., the third threshold), then the first switch S1 shall be switched on immediately to ensure normal discharging.

In another embodiment, when the battery unit is in current limiting charging, the power supply Y1 is powered off and charging stops. The processor U2 immediately controls the first switch S1 to be switched on, the current limiting unit U3 to be switched off, the current limiting unit U3 exits operation and discharging starts.

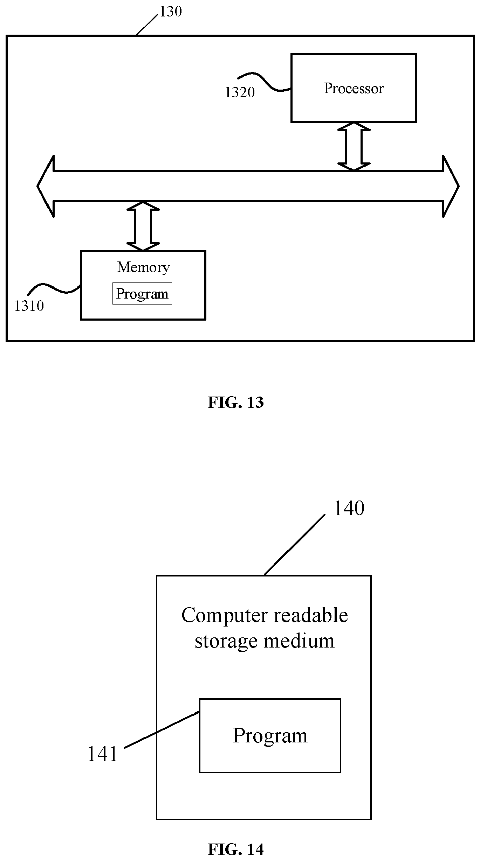

FIG. 13 is a schematic diagram of a charging/discharging control apparatus according to an embodiment of the present disclosure. As shown in FIG. 13, a charging/discharging control apparatus 130 includes a memory 1310 and a processor 1320. The memory 1310 stores a program. When the program is read and executed by the processor 1320, one embodiment of the charging/discharging control methods of the present invention is implemented.

FIG. 14 is a schematic diagram of a storage medium according to an embodiment of the present disclosure. As shown in FIG. 14, a computer readable storage medium 140 stores one or more programs 141, and the one or more programs 141 may be executed by one or more processors to implement one embodiment of the charging/discharging control methods of the present invention.

A person of ordinary skill in the art can understand that all or some of the steps, functional modules/units in the system and apparatus in the methods disclosed above may be implemented as software, firmware, hardware, and appropriate combinations thereof. In a hardware implementation, classification between functional modules/units mentioned in the above description does not necessarily correspond to classification of physical components. For example, a physical component may have multiple functions, or one function or step may be performed by a plurality of physical components. Some or all the components may be implemented as software implemented by a processor such as a digital signal processor or a microprocessor, or may be implemented as hardware, or may be implemented as an integrated circuit, e.g., an application specific integrated circuit. Such software may be distributed on a computer readable medium, and the computer-readable medium may include a computer storage medium (or a non-transitory medium) and a communication medium (or a transitory medium). As is well known to those of ordinary skill in the art, the term computer storage medium includes volatile and nonvolatile, removable and non-removable media implemented in any method or technology for storing information (such as a computer readable instruction, a data structure, a program module, or other data). A computer storage media may be but not limited to RAM, ROM, EEPROM, flash memory or other memory technologies, CD-ROM, digital versatile disk (DVD) or other optical disk storage, magnetic cassettes, magnetic tapes, magnetic disk storage or other magnetic storage apparatuses, or any other medium used to store desired information and that can be accessed by a computer. In addition, as is well known to those of ordinary skill in the art, the communication medium may usually be a computer readable instruction, a data structure, a program module, or other data in a modulated data signal such as a carrier or other transmission mechanisms, and may be any information delivery medium.

## Claims

1. A charging/discharging apparatus, comprising a processor (U2), a voltage measurement unit (D1), a current limiting unit (U3), and a switch unit (U4); wherein after the current limiting unit (U3) is connected in parallel to the switch unit (U4), a branch comprising said two elements in parallel is connectable in series to a battery unit (U1) and a power supply (Y1) configured to charge the battery unit (U1); the processor (U2) is connected to the voltage measurement unit (D1), the current limiting unit (U3), and the switch unit (U4); the voltage measurement unit (D1) is connected to two ends of the battery unit (U1); and the voltage measurement unit (D1) is connected to two ends of the power supply (Y1); and wherein
the voltage measurement unit (D1) is configured to measure a voltage over two ends of the battery unit (U1), and measure a voltage over two ends of the power supply (Y1);
the processor (U2) is configured to, according to the voltages measured by the voltage measurement unit (D1), on/off states of the current limiting unit (U3) and the switch unit (U4) to implement charging/discharging of the battery unit (U1) by at least one of the current limiting unit (U3) and the switch unit (U4);
the processor (U2) is configured to switch on or off the current limit unit (U3), so that a charging branch with a limited current current is or is not provided, respectively; and
the processor (U2) is configured to switch on or off the switch unit (U4), so that a charging branch with unlimited current is or is not provided, respectively; and
the charging/discharging apparatus further comprising a current measurement unit and a shunt, the current measurement unit is connected with the shunt and the processor (U2), and the shunt is connected with the battery unit (U1) in series;
the current measurement unit is configured to measure a discharging current or a charging current of the battery unit (U1), and
the processor (U2) is further configured to control, according to the discharging current or the charging current measured by the current measurement unit, on/off states of the current limiting unit (U3) and the switch unit (U4) to implement charging/discharging of the battery unit (U1) by at least one of the current limiting unit (U3) and the switch unit (U4), wherein this control and implementation by the processor comprises switching off the charging branch of the switch unit (U4) and switching on the current limiting unit (U3) when the three following conditions are fulfilled:
the current limiting unit (U3) is switched off, the charging branch of the switch unit (U4) is switched on, and the current measured by the current measurement unit is greater than or equal to a second threshold (Imax); and
the processor (U2) is further configured to adjust a current value of the current limiting unit (U3) after the current limiting unit (U3) is switched on.

2. The charging/discharging apparatus according to claim 1, wherein the processor (U2) is configured to control, according to the voltages measured by the voltage measurement unit (D1), on/off states of the current limiting unit (U3) and the switch unit (U4) to implement charging/discharging of the battery unit (U1) by at least one of the current limiting unit (U3) and the switch unit (U4) comprises:
switching off the charging branch of the switch unit (U4) and switching on the current limiting unit (U3) when a difference between a voltage of the power supply (Y1) and a voltage of the battery unit (U1) that are measured by the voltage measurement unit (D1) is greater than or equal to a first threshold (U0), so as to charge the battery unit (U1) through the current limiting unit (U3); and
switching off the current limiting unit (U3) and switching on the charging branch of the switch unit (U4) when the difference between the voltage of the power supply (Y1) and the voltage of the battery unit (U1) is smaller than the first threshold (U0), so as to charge the battery unit (U1) through the switch unit (U4).

3. The charging/discharging apparatus according to claim 1, wherein the switch unit (U4) is further configured to provide a unidirectional discharging branch to be switched on or off based on the processor's control;
optionally, the processor (U2) is further configured to switch on the unidirectional discharging branch of the switch unit (U4) before charging or before comparing voltage values of the power supply (Y1) and the battery unit (U1);
optionally, the processor (U2) is further configured to, when the battery unit (U1) is fully charged, switch off the charging branch of the switch unit (U4), switch on the unidirectional discharging branch of the switch unit (U4), and switch off the current limiting unit (U3).

4. The charging/discharging apparatus according to claim 1, wherein the processor (U2) is further configured to at least one of following operations:
i) when the power supply (Y1) is powered off, switch off the charging branch of the switch unit (U4), switch off the current limiting unit (U3) and switch on the unidirectional discharging branch of the switch unit (U4);
ii) when the power supply (Y1) is powered off, switch off the current limiting unit (U3) and switch on the charging branch of the switch unit (U4);
iii) when the power supply (Y1) is powered off and the current measured by the current measurement unit is greater than a third threshold (Imin), switch off the current limiting unit (U3) and switch on the charging branch of the switch unit (U4).

5. The charging/discharging apparatus according to claim 1, wherein the switch unit (U4) comprises at least one of following components:
i) a first switch (S1), a second switch (S2) and a first diode (B1), the first diode (B1) and the second switch (S2) being connected in series, the first switch (S 1) being connected in parallel to two ends of a series branch configured by the first diode (B1) and the second switch (S2), and a conduction direction of the first diode (B1) being a discharging current direction of the battery unit (U1);
ii) a first switch (S 1) and a second switch (S2) connected in series and a first diode (B1) connected in parallel to two ends of the first switch (S1), the conduction direction of the first diode (B1) being the discharging current direction of the battery unit (U1);
iii) a first switch (S1) and a second switch (S2) connected in series, a first diode (B1) connected in parallel to the two ends of the first switch (S1), and a second diode (B2) connected in parallel to two ends of the second switch (S2), the conduction direction of the first diode (B1) being the discharging current direction of the battery unit (U1), and a conduction direction of the second diode (B2) being a charging current direction for charging the battery unit (U1); and
wherein the voltage measurement unit (D1) comprises a first voltage measurement unit (D1-1) and a second voltage measurement unit (D1-2), the first voltage measurement unit (D1-1) being connected to two ends of the battery unit (U1), and the second voltage measurement unit (D1-2) being connected to two ends of the power supply (Y1), and wherein
the first voltage measurement unit (D1-1) is configured to measure voltage over the two ends of the battery unit (U1), and
the second voltage measurement unit (D1-2) is configured to measure voltage over the two ends of the power supply (Y1).

6. The charging/discharging apparatus according to any one of claims 1 to 5, further comprising a cell measurement unit (D4) connecting the battery unit (U1) and the processor (U2), wherein
the cell measurement unit (D4) is configured to measure a cell voltage and a cell temperature in the battery unit (U1), and
the processor (U2) is further configured to control the on/off states of the current limiting unit (U3) and the switch unit (U4) based on the cell voltage and the cell temperature.

7. A battery apparatus, comprising a battery unit (U1) and the charging/discharging apparatus according to any one of claims 1 to 6.

8. A charging/discharging control method, applicable for the charging/discharging apparatus according to any one of claims 1 to 6, comprising:
acquiring a first voltage over the two ends of the battery unit (U1) and a second voltage over the two ends of the power supply (Y1); and
controlling the on/off states of the current limiting unit (U3) and the switch unit (U4) according to the first voltage and the second voltage to perform charging/discharging of the battery unit (U1) through at least one of the current limiting unit (U3) and the switch unit (U4); and
the method further comprising:
acquiring the charging current or the discharging current of the battery unit (U1);
controlling the on/off states of the current limiting unit (U3) and the switch unit (U4) according to the charging current or the discharging current to perform the charging/discharging of the battery unit (U1) through at least one of the current limiting unit (U3) and the switch unit (U4) comprises,
switching off the charging branch of the switch unit (U4) and switching on the current limiting unit (U3) when the current limiting unit (U3) is switched off, the charging branch of the switch unit (U4) is switched on, and the discharging current is greater than or equal to a second threshold (Imax).

9. The charging/discharging control method according to claim 8, wherein controlling the on/off states of the current limiting unit (U3) and the switch unit (U4) according to the first voltage and the second voltage to perform charging/discharging of the battery unit (U1) through at least one of the current limiting unit (U3) and the switch unit (U4) comprises:
switching off the charging branch of the switch unit (U4) and switching on the current limiting unit (U3) when a difference between the second voltage and the first voltage is greater than or equal to a first threshold (U0), so as to charge the battery unit (U1) through the current limiting unit (U3); and
switching off the current limiting unit (U3) and switching on the charging branch of the switch unit (U4) when the difference between the second voltage and the first voltage is smaller than the first threshold (U0), so as to charge the battery unit (U1) through the switch unit (U4).

10. The charging/discharging control method according to claim 8, further comprising switching on a unidirectional discharging branch of the switch unit (U4) before charging or before comparing voltage values of the power supply (Y1) and the battery unit (U1);
optionally, further comprising: switching off the charging branch of the switch unit (U4), switching on the unidirectional discharging branch of the switch unit (U4), and switching off the current limiting unit (U3) when the battery unit (U1) is fully charged.

11. The charging/discharging control method according to any one of claims 8 to 10, further comprising at least one of following operations:
i) switching off the current limiting unit (U3), switching off the charging branch of the switch unit (U4), and switching on the unidirectional discharging branch of the switch unit (U4), when the power supply (Y1) is powered off;
ii) switching off the current limiting unit (U3) and switching on the charging branch of the switch unit (U4) when the power supply (Y1) is powered off;
iii) switching off the current limiting unit (U3) and switching on the charging branch of the switch unit (U4) when the power supply (Y1) is powered off and the discharging current of the battery unit (U1) is greater than a third threshold (Imin).

12. A charging/discharging control apparatus, comprising a memory and a processor, the memory storing a program that, when executed by the processor, performs the charging/discharging control method according to any one of claims 8-11.

13. A computer readable storage medium having one or more programs capable of being performed by one or more processors to perform the charging/discharging control method according to any one of claims 8-11.

## Patentansprüche

1. Lade-/Entladegerät, das einen Prozessor (U2), eine Spannungsmesseinheit (D1), eine Strombegrenzungseinheit (U3) und eine Umschalteinheit (U4) umfasst; wobei, nachdem die Strombegrenzungseinheit (U3) mit der Umschalteinheit (U4) parallel geschaltet wurde, ein Schenkel, der die zwei Elemente, die parallel geschaltet sind, umfasst, mit einer Batterieeinheit (U1) in Reihe schaltbar ist, und eine Stromversorgung (Y1), die dazu konfiguriert ist, die Batterieeinheit (U1) zu laden; der Prozessor (U2) mit der Spannungsmesseinheit (D1), der Strombegrenzungseinheit (U3) und der Umschalteinheit (U4) verbunden ist, die Spannungsmesseinheit (D1) an zwei Enden der Batterieeinheit (U1) angeschlossen ist; und die Spannungsmesseinheit (D1) an zwei Enden der Stromversorgung (Y1) verbunden ist; und wobei
die Spannungsmesseinheit (D1) dazu konfiguriert ist, eine Spannung über zwei Enden der Batterieeinheit (U1) zu messen, und eine Spannung über zwei Enden der Stromversorgung (Y1) zu messen;
der Prozessor (2) dazu konfiguriert ist, gemäß den Spannungen, die von der Spannungsmesseinheit (D1) gemessen werden, Ein-/Aus-Zustände der Strombegrenzungseinheit (U3) und der Umschalteinheit (U4) zu steuern, um Laden/Entladen der Batterieeinheit (U1) durch mindestens eine der Strombegrenzungseinheit (U3) und der Umschalteinheit (U4) umzusetzen;
der Prozessor (U2) dazu konfiguriert ist, die Strombegrenzungseinheit (U3) derart einzuschalten oder abzuschalten, dass ein Ladeschenkel jeweils mit einem begrenzten Strom bereitgestellt wird oder nicht;
der Prozessor (U2) dazu konfiguriert ist, die Umschalteinheit (U4) derart einzuschalten oder abzuschalten, dass jeweils ein unbegrenzter Strom bereitgestellt wird oder nicht; und
das Lade-/Entladegerät ferner eine Strommesseinheit und einen Nebenschluss umfasst, wobei die Strommesseinheit mit dem Nebenschluss und dem Prozessor (U2) verbunden ist, und der Nebenschluss mit der Batterieeinheit (U1) in Reihe geschaltet ist;
die Strommesseinheit dazu konfiguriert ist, einen Entladestrom oder einen Ladestrom der Batterieeinheit (U1) zu messen, und
der Prozessor (U2) ferner dazu konfiguriert ist, gemäß dem Entladestrom oder dem Ladestrom, der von der Strommesseinheit gemessen wird, Ein-/Aus-Zustände der Strombegrenzungseinheit (U3) und der Umschalteinheit (U4) zu steuern, um Laden/Entladen der Batterieeinheit (U1) durch mindestens eine der Strombegrenzungseinheit (U3) und der Umschalteinheit (U4) umzusetzen, wobei diese Steuerung und Umsetzung durch den Prozessor das Abschalten des Ladeschenkels der Umschalteinheit (U4) und das Einschalten der Strombegrenzungseinheit (U3) umfasst, wenn die drei folgenden Bedingungen erfüllt sind:
die Strombegrenzungseinheit (U3) wird abgeschaltet, der Ladeschenkel der Umschalteinheit (U4) wird eingeschaltet, und der Strom, der von der Strommesseinheit gemessen wird, ist größer oder gleich einem zweiten Schwellenwert (Imax); und
der Prozessor (U2) ist ferner dazu konfiguriert, einen Stromwert der Strombegrenzungseinheit (U3) einzustellen, nachdem die Strombegrenzungseinheit (U3) eingeschaltet wurde.

2. Lade-/Entladegerät nach Anspruch 1, wobei, der Prozessor (U2) dazu konfiguriert ist, gemäß den Spannungen, die von der Spannungsmesseinheit (D1) gemessen werden, Ein-/Aus-Zustände der Strombegrenzungseinheit (U3) und der Umschalteinheit (U4) zu steuern, um Laden/Entladen der Batterieeinheit (U1) durch mindestens eine der Strombegrenzungseinheit (U3) und der Umschalteinheit (U4) umzusetzen, umfassend:
Abschalten des Ladeschenkels der Umschalteinheit (U4) und Einschalten der Strombegrenzungseinheit (U3), wenn eine Differenz zwischen einer Spannung der Stromversorgung (Y1) und einer Spannung der Batterieeinheit (U1), die von der Strommesseinheit (D1) gemessen wird, größer oder gleich einem ersten Schwellenwert (U0) ist, um die Batterieeinheit (U1) durch die Strombegrenzungseinheit (U3) zu laden; und
Abschalten der Strombegrenzungseinheit (U3) und Einschalten des Ladeschenkels der Umschalteinheit (U4), wenn die Differenz zwischen der Spannung der Stromversorgung (Y1) und der Spannung der Batterieeinheit (U1) kleiner als der erste Schwellenwert (U0) ist, um die Batterieeinheit (U1) durch die Umschalteinheit (U4) zu laden.

3. Lade-/Entladegerät nach Anspruch 1, wobei die Umschalteinheit (U4) ferner dazu konfiguriert ist, einen unidirektionalen Entladeschenkel bereitzustellen, der basierend auf der Steuerung des Prozessors ein- oder ausgeschaltet werden soll;
der Prozessor (U2) ferner wahlweise dazu konfiguriert ist, den unidirektionalen Entladeschenkel der Umschalteinheit (U4) vor dem Laden oder vor dem Vergleichen von Spannungswerten der Stromversorgung (Y1) und der Batterieeinheit (U1) umzuschalten;
der Prozessor (U2) wahlweise ferner dazu konfiguriert ist, den Ladeschenkel der Umschalteinheit (U4) abzuschalten, den unidirektionalen Entladeschenkel der Umschalteinheit (U4) einzuschalten und die Strombegrenzungseinheit (U3) abzuschalten, wenn die Batterieeinheit (U1) vollständig geladen ist.

4. Lade-/Entladegerät nach Anspruch 1, wobei der Prozessor (U2) ferner für mindestens eine der folgenden Operationen konfiguriert ist:
i) wenn die Stromversorgung (Y1) abgeschaltet wird, den Ladeschenkel der Umschalteinheit (U4) abzuschalten, die Strombegrenzungseinheit (U3) abzuschalten und den unidirektionalen Entladeschenkel der Umschalteinheit (U4) einzuschalten;
ii) wenn die Stromversorgung (Y1) abgeschaltet wird, die Strombegrenzungseinheit (U3) abzuschalten und den Ladeschenkel der Umschalteinheit (U4) einzuschalten;
iii) wenn die Stromversorgung (Y1) abgeschaltet wird, und der Strom, der von der Strommesseinheit gemessen wird, größer als ein dritter Schwellenwert (Imin) ist, die Strombegrenzungseinheit (U3) abzuschalten und den Ladeschenkel der Umschalteinheit (U4) einzuschalten.

5. Lade-/Entladegerät nach Anspruch 1, wobei die Umschalteinheit (U4) mindestens eines der folgenden Bauteile umfasst:
i) einen ersten Schalter (S1), einen zweiten Schalter (S2) und eine erste Diode (B1), wobei die erste Diode (B1) und der zweite Schalter (S2) in Reihe geschaltet sind, der erste Schalter (S1) an zwei Enden eines Schenkels, der von der ersten Diode (B1) und dem zweiten Schalter (S2) konfiguriert ist, in Reihe geschaltet ist, und eine Leitungsrichtung der ersten Diode (B1) eine Entladestromrichtung der Batterieeinheit (U1) ist;
ii) einen ersten Schalter (S1) und einen zweiten Schalter (S2), die in Reihe geschaltet sind, und eine erste Diode (B1), die an zwei Enden des ersten Schalters (S1) parallel geschaltet ist, wobei die Leitungsrichtung der ersten Diode (B1) die Entladestromrichtung der Batterieeinheit (U1) ist;
iii) einen ersten Schalter (S1) und einen zweiten Schalter (S2), die in Reihe geschaltet sind, eine erste Diode (B1), die an den zwei Enden des ersten Schalters (S1) parallel geschaltet ist, und eine zweite Diode (B2), die an zwei Enden des zweiten Schalters (S2) verbunden ist, die Leitungsrichtung der ersten Diode (B1) die Entladestromrichtung der Batterieeinheit (U1) ist, und eine Leitungsrichtung der zweiten Diode (B2) eine Ladestromrichtung zum Laden der Batterieeinheit (U1) ist; und
wobei die Spannungsmesseinheit (D1) eine erste Spannungsmesseinheit (D1-1) und eine zweite Spannungsmesseinheit (D1-2) umfasst, wobei die erste Spannungsmesseinheit (D1-1) an zwei Enden der Batterieeinheit (U1) verbunden ist, und die zweite Spannungsmesseinheit (D1-2) an zwei Enden der Stromversorgung (Y1) verbunden ist, und wobei
die erste Spannungsmesseinheit (D1-1) dazu konfiguriert ist, Spannung über die zwei Enden der Batterieeinheit (U1) zu messen, und
die zweite Spannungsmesseinheit (D1-2) dazu konfiguriert ist, Spannung über die zwei Enden der Stromversorgung (Y1) zu messen.

6. Lade-/Entladegerät nach einem der Ansprüche 1 bis 5, das ferner eine Zellmesseinheit (D4) umfasst, die die Batterieeinheit (U1) und den Prozessor (U2) verbindet, wobei
die Zellmesseinheit (D4) dazu konfiguriert ist, eine Zellspannung und eine Zelltemperatur in der Batterieeinheit (U1) zu messen, und
der Prozessor (U2) ferner dazu konfiguriert ist, Ein-/Aus-Zustände der Strombegrenzungseinheit (U3) und der Umschalteinheit (U4) basierend auf der Zellspannung und der Zelltemperatur zu steuern.

7. Batteriegerät, das eine Batterieeinheit (U1) und das Lade-/Entladegerät nach einem der Ansprüche 1 bis 6 umfasst.

8. Lade-/Entladesteuerverfahren, das an das Lade-/Entladegerät nach einem der Ansprüche 1 bis 6 anwendbar ist, umfassend:
Erheben einer ersten Spannung über die zwei Enden der Batterieeinheit (U1) und einer zweiten Spannung über die zwei Enden der Stromversorgung (Y1); und
Steuern der Ein-/Aus-Zustände der Strombegrenzungseinheit (U3) und der Umschalteinheit (U4) gemäß der ersten Spannung und der zweiten Spannung, um Laden-/Entladen der Batterieeinheit (U1) durch mindestens eine der Strombegrenzungseinheit (U3) und der Umschalteinheit (U4) durchzuführen; und
wobei das Verfahren weiter Folgendes umfasst:
Erheben des Ladestroms oder des Entladestroms der Batterieeinheit (U1);
das Steuern der Ein-/Aus-Zustände der Strombegrenzungseinheit (U3) und der Umschalteinheit (U4) gemäß dem Ladestrom oder dem Entladestrom, um das Laden/Entladen der Batterieeinheit (U1) durch mindestens eine der Strombegrenzungseinheit (U3) und der Umschalteinheit (U4) durchzuführen, Folgendes umfasst,
Abschalten des Ladeschenkels der Umschalteinheit (U4) und Einschalten der Strombegrenzungseinheit (U3), wenn die Strombegrenzungseinheit (U3) abgeschaltet wird, der Ladeschenkel der Umschalteinheit (U4) eingeschaltet wird, und der Entladestrom größer oder gleich einem zweiten Schwellenwert (Imax) ist.

9. Lade-/Entladesteuerverfahren nach Anspruch 8, wobei das Steuern der Ein-/Aus-Zustände der Strombegrenzungseinheit (U3) und der Umschalteinheit (U4) gemäß der ersten Spannung und der zweiten Spannung, um Laden/Entladen der Batterieeinheit (U1) durch mindestens eine der Strombegrenzungseinheit (U3) und der Umschalteinheit (U4) durchzuführen, Folgendes umfasst:
Abschalten des Ladeschenkels der Umschalteinheit (U4) und Einschalten der Strombegrenzungseinheit (U3), wenn eine Differenz zwischen der zweiten Spannung und der ersten Spannung größer oder gleich einem ersten Schwellenwert (U0) ist, um die Batterieeinheit (U1) durch die Strombegrenzungseinheit (U3) zu laden; und
Abschalten der Strombegrenzungseinheit (U3) und Einschalten des Ladeschenkels der Umschalteinheit (U4), wenn die Differenz zwischen der zweiten Spannung und der ersten Spannung kleiner als der erste Schwellenwert (U0) ist, um die Batterieeinheit (U1) durch die Umschalteinheit (U4) zu laden.

10. Lade-/Entladesteuerverfahren nach Anspruch 8, das ferner das Umschalten auf einen unidirektionalen Entladeschenkel der Umschalteinheit (U4) vor dem Laden oder vor dem Vergleichen von Spannungswerten der Stromversorgung (Y1) und der Batterieeinheit (U1) umfasst;
das wahlweise ferner Folgendes umfasst: Abschalten des Ladeschenkels der Umschalteinheit (U4), Einschalten des unidirektionalen Entladeschenkels der Umschalteinheit (U4) und Abschalten der Strombegrenzungseinheit (U3), wenn die Batterieeinheit (U1) vollständig geladen ist.

11. Lade-/Entladesteuerverfahren nach einem der Ansprüche 8 bis 10, das weiter mindestens eine der folgenden Operationen umfasst:
i) Abschalten der Strombegrenzungseinheit (U3), Abschalten des Ladeschenkels der Umschalteinheit (U4) und Einschalten des unidirektionalen Entladeschenkels der Umschalteinheit (U4), wenn die Stromversorgung (Y1) abgeschaltet wird;
ii) Abschalten der Strombegrenzungseinheit (U3) und Einschalten des Ladeschenkels der Umschalteinheit (U4), wenn die Stromversorgung (Y1) abgeschaltet wird;
iii) Abschalten der Strombegrenzungseinheit (U3) und Einschalten des Ladeschenkels der Umschalteinheit (U4), wenn die Stromversorgung (Y1) abgeschaltet wird und der Entladestrom der Batterieeinheit (U1) größer ist als ein dritter Schwellenwert (Imin).

12. Lade-/Entladesteuergerät, das einen Speicher und einen Prozessor umfasst, wobei der Speicher ein Programm speichert, das, wenn es von dem Prozessor ausgeführt wird, das Lade-/Entladesteuerverfahren nach einem der Ansprüche 8-11 durchführt.

13. Computerlesbares Speichermedium, das ein oder mehrere Programme aufweist, die in der Lage sind, von einem oder mehreren Prozessoren ausgeführt zu werden, um das Lade-/Entladesteuerverfahren nach einem der Ansprüche 8-11 durchzuführen.

## Revendications

1. Appareil de charge/décharge comprenant un processeur (U2), une unité de mesure de tension (D1), une unité de limitation de courant (U3) et une unité de commutation (U4); dans lequel après que l'unité de limitation de courant (U3) a été connectée en parallèle à l'unité de commutation (U4), une branche comprenant lesdits deux éléments en parallèle est connectable en série à une unité de batterie (U1) et une alimentation électrique (Y1) configurée pour charger l'unité de batterie (U1); le processeur (U2) est connecté à l'unité de mesure de tension (D1), à l'unité de limitation de courant (U3) et à l'unité de commutation (U4) ; l'unité de mesure de tension (D1) est connectée aux deux extrémités de l'unité de batterie (U1) ; et l'unité de mesure de tension (D1) est connectée aux deux extrémités de l'alimentation électrique (Y1) ; et dans lequel l'unité de mesure de tension (D1) est configurée pour mesurer une tension sur deux extrémités de l'unité de batterie (U1), et mesurer une tension sur deux extrémités de l'alimentation (Y1) ; le processeur (U2) est configuré pour, en fonction des tensions mesurées par l'unité de mesure de tension (DI), commander des états de marche/arrêt de l'unité de limitation de courant (U3) et de l'unité de commutation (U4) pour mettre en œuvre la charge/décharge de l'unité de batterie (U1) par au moins une parmi l'unité de limitation de courant (U3) et l'unité de commutation (U4) ;
le processeur (U2) est configuré pour mettre sous tension ou mettre hors tension l'unité de limitation de courant (U3), de sorte qu'une branche de charge avec un courant de courant limité est ou n'est pas prévue, respectivement ; et
le processeur (U2) est configuré pour mettre sous tension ou mettre hors tension l'unité de commutation (U4), de sorte qu'une branche de charge à courant illimité est ou n'est pas prévue, respectivement ; et
l'appareil de charge/décharge comprenant en outre une unité de mesure de courant et un shunt, l'unité de mesure de courant est connectée au shunt et au processeur (U2), et le shunt est connecté à l'unité de batterie (U1) en série ; l'unité de mesure de courant est configurée pour mesurer un courant de décharge ou un courant de charge de l'unité de batterie (U1), et le processeur (U2) est en outre configuré pour commander, selon le courant de décharge ou le courant de charge mesuré par l'unité de mesure de courant, des états de marche/arrêt de l'unité de limitation de courant (U3) et de l'unité de commutation (U4) pour mettre en œuvre la charge/décharge de l'unité de batterie (U1) par au moins une parmi l'unité de limitation de courant (U3) et l'unité de commutation (U4), dans lequel cette commande et cette mise en œuvre par le processeur comprennent d'arrêter la branche de charge de l'unité de commutation (U4) et de mettre sous tension l'unité de limitation de courant (U3) lorsque les trois conditions suivantes sont remplies :
l'unité de limitation de courant (U3) est désactivée, la branche de charge de l'unité de commutation (U4) est activée et le courant mesuré par l'unité de mesure de courant est supérieur ou égal à un deuxième seuil (Imax) ; et
le processeur (U2) est en outre configuré pour ajuster une valeur de courant de l'unité de limitation de courant (U3) après la mise sous tension de l'unité de limitation de courant (U3).

2. Appareil de charge/décharge selon la revendication 1, dans lequel le processeur (U2) est configuré pour commander, en fonction des tensions mesurées par l'unité de mesure de tension (D1), les états de marche/arrêt de l'unité de limitation de courant (U3) et l'unité de commutation (U4) pour mettre en œuvre la charge/décharge de l'unité de batterie (U1) par au moins une parmi l'unité de limitation de courant (U3) et l'unité de commutation (U4) comprend :
la mise hors tension de la branche de charge de l'unité de commutation (U4) et la mise sous tension de l'unité de limitation de courant (U3) lorsqu'une différence entre une tension de l'alimentation électrique (Y1) et une tension de l'unité de batterie (U1) qU1 sont mesurées par l'unité de mesure de tension (D1) est supérieure ou égale à un premier seuil (U0), de manière à charger l'unité de batterie (U1) par l'intermédiaire de l'unité de limitation de courant (U3) ; et
la mise hors tension de l'unité de limitation de courant (U3) et la mise sous tension de la branche de charge de l'unité de commutation (U4) lorsque la différence entre la tension de l'alimentation (Y1) et la tension de l'unité de batterie (U1) est inférieure à le premier seuil (U0), de manière à charger l'unité de batterie (U1) par l'intermédiaire de l'unité de commutation (U4).

3. Appareil de charge/décharge selon la revendication 1, dans lequel l'unité de commutation (U4) est en outre configurée pour fournir une branche de décharge unidirectionnelle à mettre sous tension ou mettre sous tension sur la base de la commande du processeur ;
optionnellement, le processeur (U2) est en outre configuré pour mettre sous tension la branche de décharge unidirectionnelle de l'unité de commutation (U4) avant la charge ou avant de comparer les valeurs de tension de l'alimentation électrique (Y1) et de l'unité de batterie (U1) ; optionnellement, le processeur (U2) est en outre configuré pour, lorsque l'unité de batterie (U1) est complètement chargée, mettre hors tension la branche de charge de l'unité de commutation (U4), mettre sous tension la branche de décharge unidirectionnelle de l'unité de commutation (U4), et mettre hors tension l'unité de limitation de courant (U3).

4. Appareil de charge/décharge selon la revendication 1, dans lequel le processeur (U2) est en outre configuré pour au moins une des opérations suivantes :
i) lorsque l'alimentation électrique (Y1) est coupée, mettre hors tension la branche de charge de l'unité de commutation (U4), mettre hors tension l'unité de limitation de courant (U3) et mettre sous tension la branche de décharge unidirectionnelle de l'unité de commutation (U4) ;
ii) lorsque l'alimentation électrique (Y1) est coupée, mettre hors tension l'unité de limitation de courant (U3) et mettre sous tension la branche de charge de l'unité de commutation (U4) ;
iii) lorsque l'alimentation (Y1) est coupée et que le courant mesuré par l'unité de mesure de courant est supérieur à un troisième seuil (Imin), mettre hors tension l'unité de limitation de courant (U3) et mettre sous tension la branche de charge de l'unité de commutation (U4).

5. Appareil de charge/décharge selon la revendication 1, dans lequel l'unité de commutation (U4) comprend au moins un des composants suivants :
i) un premier commutateur (S1), un deuxième commutateur (S2) et une première diode (B1), la première diode (B1) et le deuxième commutateur (S2) étant connectés en série, le premier commutateur (S1) étant connecté en parallèle aux deux extrémités d'une branche en série configurée par la première diode (B1) et le deuxième commutateur (S2), et une direction de conduction de la première diode (B1) étant une direction de courant de décharge de l'unité de batterie (U1) ;
ii) un premier commutateur (S1) et un deuxième commutateur (S2) connectés en série et une première diode (B1) connectée en parallèle aux deux extrémités du premier commutateur (S1), la direction de conduction de la première diode (B1) étant la direction du courant de décharge de l'unité de batterie (U1) ;
iii) un premier commutateur (S1) et un deuxième commutateur (S2) connectés en série, une première diode (B1) connectée en parallèle aux deux extrémités du premier commutateur (S1), et une deuxième diode (B2) connectée en parallèle aux deux extrémités du deuxième commutateur (S2), la direction de conduction de la première diode (B1) étant la direction du courant de décharge de l'unité de batterie (U1), et une direction de conduction de la deuxième diode (B2) étant une direction de courant de charge pour charger l'unité de batterie (U1) ; et
dans lequel l'unité de mesure de tension (D1) comprend une première unité de mesure de tension (D) et une deuxième unité de mesure de tension (D1-2), la première unité de mesure de tension (D1-1) étant connectée aux deux extrémités de l'unité de batterie (U1), et la deuxième unité de mesure de tension (D1-2) étant connectée aux deux extrémités de l'alimentation (Y1), et dans laquelle la première unité de mesure de tension (D1-1) est configurée pour mesurer la tension sur les deux extrémités de l'unité de batterie (U1), et la deuxième unité de mesure de tension (D1-2) est configurée pour mesurer la tension sur les deux extrémités de l'alimentation (Y1).

6. Appareil de charge/décharge selon une quelconque des revendications 1 à 5, comprenant en outre une unité de mesure de cellule (D4) connectant l'unité de batterie (U1) et le processeur (U2), dans lequel l'unité de mesure de cellule (D4) est configurée pour mesurer une tension de cellule et une température de cellule dans l'unité de batterie (U1), et le processeur (U2) est en outre configuré pour commander les états de marche/arrêt de l'unité de limitation de courant (U3) et de l'unité de commutation (U4) en fonction de la tension et de la température de la cellule.

7. Appareil à batterie, comprenant une unité de batterie (U1) et l'appareil de charge/décharge selon une quelconque des revendications 1 à 6.

8. Procédé de commande de charge/décharge, applicable à l'appareil de charge/décharge selon une quelconque des revendications 1 à 6, comprenant de :
acquérir une première tension aux deux extrémités de l'unité de batterie (U1) et une deuxième tension aux deux extrémités de l'alimentation (Y1) ; et
commander des états de marche/arrêt de l'unité de limitation de courant (U3) et de l'unité de commutation (U4) selon la première tension et la deuxième tension pour effectuer la charge/décharge de l'unité de batterie (U1) à travers au moins une de l'unité de limitation de courant (U3) et l'unité de commutation (U4); et
le procédé comprenant en outre de :
acquérir le courant de charge ou le courant de décharge de l'unité de batterie (U1);
commander les états de marche/arrêt de l'unité de limitation de courant (U3) et de l'unité de commutation (U4) en fonction du courant de charge ou du courant de décharge pour effectuer la charge/décharge de l'unité de batterie (U1) à travers au moins une de l'unité de limitation de courant (U3) et l'unité de commutation (U4),
mettre hors tension la branche de charge de l'unité de commutation (U4) et mettre sous tension l'unité de limitation de courant (U3) lorsque l'unité de limitation de courant (U3) est mise hors tension, la branche de charge de l'unité de commutation (U4) est mise sous tension, et le courant de décharge est supérieur ou égal à un deuxième seuil (Imax).

9. Procédé de commande de charge/décharge selon la revendication 8, dans lequel la commande des états de marche/arrêt de l'unité de limitation de courant (U3) et de l'unité de commutation (U4) selon la première tension et la deuxième tension pour effectuer la charge/décharge de l'unité de batterie (U1) par l'intermédiaire d'au moins une parmi l'unité de limitation de courant (U3) et l'unité de commutation (U4) comprend de :
mettre hors tension la branche de charge de l'unité de commutation (U4) et mettre sous tension l'unité de limitation de courant (U3) lorsqu'une différence entre la deuxième tension et la première tension est supérieure ou égale à un premier seuil (U0), de manière à charger l'unité de batterie (U1) par l'intermédiaire de l'unité de limitation de courant (U3); et
mettre hors tension l'unité de limitation de courant (U3) et mettre sous tension la branche de charge de l'unité de commutation (U4) lorsque la différence entre la deuxième tension et la première tension est inférieure au premier seuil (U0), de manière à charger l'unité de batterie (U1) par l'intermédiaire de l'unité de commutation (U4).

10. Procédé de commande de charge/décharge selon la revendication 8, comprenant en outre de mettre sous tension une branche de décharge unidirectionnelle de l'unité de commutation (U4) avant la charge ou avant la comparaison des valeurs de tension de l'alimentation électrique (Y1) et de l'unité de batterie (U1) ;
optionnellement, comprenant en outre de: mettre hors tension la branche de charge de l'unité de commutation (U4), mettre sous tension la branche de décharge unidirectionnelle de l'unité de commutation (U4) et mettre hors tension l'unité de limitation de courant (U3) lorsque l'unité de batterie (U1) est complètement chargée.

11. Procédé de commande de charge/décharge selon une quelconque des revendications 8 à 10, comprenant en outre au moins une des opérations suivantes :
i) mettre hors tension l'unité de limitation de courant (U3), mettre hors tension la branche de charge de l'unité de commutateur (U4) et mettre sous tension la branche de décharge unidirectionnelle de l'unité de commutateur (U4), lorsque l'alimentation (Y1) est mise hors tension;
ii) mettre hors tension l'unité de limitation de courant (U3) et mettre sous tension la branche de charge de l'unité de commutation (U4) lorsque l'alimentation (Yl) est coupée ;
iii) mettre hors tension l'unité de limitation de courant (U3) et mettre sous tension la branche de charge de l'unité de commutation (U4) lorsque l'alimentation électrique (Y1) est mise hors tension et que le courant de décharge de l'unité de batterie (U1) est supérieur à un troisième seuil (Imin).

12. Appareil de commande de charge/décharge, comprenant une mémoire et un processeur, la mémoire mémorisant un programme qui, lorsqu'il est exécuté par le processeur, exécute le procédé de commande de charge/décharge selon une quelconque des revendications 8 à 11.

13. Support de mémorisation lisible par ordinateur ayant un ou plusieurs programmes capables d'être exécutés par un ou plusieurs processeurs pour exécuter le procédé de commande de charge/décharge selon une quelconque des revendications 8 à 11.
